(19) Europäisches Patentamt
European Patent Office
Office européen des brevets

(11) **EP 1 644 871 B1**

(12) **EUROPÄISCHE PATENTSCHRIFT**

(45) Veröffentlichungstag und Bekanntmachung des Hinweises auf die Patenterteilung:
**11.04.2012 Patentblatt 2012/15**

(21) Anmeldenummer: **04739934.0**

(22) Anmeldetag: **16.06.2004**

(51) Int Cl.:
**G06K 19/06** (2006.01)

(86) Internationale Anmeldenummer:
**PCT/EP2004/006466**

(87) Internationale Veröffentlichungsnummer:
**WO 2004/113953 (29.12.2004 Gazette 2004/53)**

(54) **OPTISCHES SICHERHEITSELEMENT UND SYSTEM ZUR VISUALISIERUNG VON VERSTECKTEN INFORMATIONEN**

OPTICAL SAFETY ELEMENT AND SYSTEM FOR VISUALISING HIDDEN INFORMATION

ELEMENT DE SECURITE OPTIQUE ET SYSTEME DE VISUALISATION D'INFORMATIONS CACHEES

(84) Benannte Vertragsstaaten:
**AT BE BG CH CY CZ DE DK EE ES FI FR GB GR HU IE IT LI LU MC NL PL PT RO SE SI SK TR**

(30) Priorität: **25.06.2003 DE 10328759**

(43) Veröffentlichungstag der Anmeldung:
**12.04.2006 Patentblatt 2006/15**

(73) Patentinhaber: **OVD Kinegram AG**
**6301 Zug (CH)**

(72) Erfinder:
• **SCHILLING, Andreas**
  **CH-6332 Hagendorn (CH)**
• **TOMPKIN, Wayne, Robert**
  **CH-5400 Baden (CH)**
• **STAUB, René**
  **CH-6332 Hagendorn (CH)**

(74) Vertreter: **Zinsinger, Norbert**
**Louis Pöhlau Lohrentz**
**P.O. Box 30 55**
**90014 Nürnberg (DE)**

(56) Entgegenhaltungen:
EP-A- 0 520 363       EP-A- 1 102 208
WO-A-99/65699       WO-A-02/100653
DE-A- 10 044 465       US-A- 6 062 604
US-B1- 6 324 004

**EP 1 644 871 B1**

**Beschreibung**

Die Erfindung betrifft ein optisches Sicherheitselement mit einer Substratschicht, in die in einem von einer X- und einer Y-Achse aufgespannten Flächenbereich eine durch Reliefparameter, insbesondere Reliefform, Relieftiefe, Spatialfrequenz und Azimutwinkel, definierte Reliefstruktur zur Erzeugung eines optisch erkennbaren Effektes ausgeformt ist, sowie ein System zur Visualisierung von versteckten Informationen mit einem derartigen optischen Sicherheitselement.

Aufgrund der immer besser werdenden Photokopiertechnik und der ständigen Weiterentwicklung von elektronischen Scann- und Druckvorrichtungen besteht ein zunehmender Bedarf an möglichst fälschungssicheren optischen Sicherheitselementen.

US 6 351 537 B1 beschreibt nun ein optisches Sicherheitselement, das ein Hologramm und ein verstecktes Bild zur Erhöhung der Kopiersicherheit kombiniert. Bei dem verwendeten Hologramm handelt es sich um ein Tageslicht-Hologramm, das durch eine in einem Photopolymerfilm abgeformte beugungsoptische Struktur generiert wird und ohne Verwendung einer monochromatischen, kohärenten Lichtquelle sichtbar ist. Das versteckte Bild und das Hologramm sind vorzugsweise benachbart auf einem Substrat angeordnet. Das versteckte Bild wird mittels einer Decodiervorrichtung sichtbar gemacht. Als Decodiervorrichtung können hierbei digitale Kopierer oder Scanner, aber auch transparente Träger dienen, auf die ein Linienraster mit einem der gewünschten Abtastfrequenz entsprechenden Linienabstand aufgedruckt ist. Das versteckte Bild wird hierbei dadurch aus einem Ausgangsbild erzeugt, dass zuerst die FrequenzKomponenten des Ausgangsbildes, die grösser als die halbe Abtastfrequenz der Decodiervorrichtung sind, entfernt werden und die verbleibenden FrequenzKomponenten sodann an der Frequenzachse gespiegelt werden, die der halben Abtastfrequenz entspricht.

Hierdurch wird von dem optischen Sicherheitselement ein erstes Sicherheitsmerkmal, nämlich das Hologramm, und ein zweites Sicherheitsmerkmal, nämlich das versteckte Bild, bereitgestellt. Dadurch erhöht sich die Fälschungssicherheit.

US 5 999 280 beschreibt ein holographisches Verfahren zur Erhöhung der Fälschungssicherheit, bei dem in einem Hologramm ein verstecktes Muster geformt ist, das nur mittels einer speziellen Decodiereinrichtung erkennbar ist. Wenn die Decodiereinrichtung über das Hologramm bewegt wird, dann kann das versteckte Muster vom Betrachter optisch erfasst werden.

Ein derartiges Hologramm wird hierbei in einem Codier-Prozess aus einem Hintergrundbild und aus dem in dem Hologramm zu versteckenden Bild generiert. Das Hintergrundbild besteht aus einem Linienraster mit einer Vielzahl paralleler, schwarzer Streifen. In dem Codier-Prozess werden nun diejenigen Teile des zu versteckenden Bildes, die über den schwarzen Streifen des Hintergrundbildes liegen, in weiss konvertiert. Diejenigen Teile des zu versteckenden Bildes, die über dem weissen Teil des Hintergrundbildes liegen, werden in schwarz belassen. Die Umsetzung in ein Hologramm erfolgt mittels klassischer holographischer Techniken, bei denen aufgrund des zugrundeliegenden physikalischen Prinzips Einschränkungen bezüglich der erzeugbaren Gitterstrukturen bestehen.

Hier ergibt sich jedoch der Nachteil, dass sich ein derartiges Sicherheitselement durch die Verwendung holographischer Techniken nachahmen lässt.

US 6 324 004 B1 beschreibt, in einem Vordergrundbereich ein erstes Beugungsgitter $B_B$ und in einem Hintergrundbereich ein zweites Beugungsgitter $B_H$ anzuordnen. Die Beugungsgitter $B_H$ und $B_B$ werden jeweils aus der Überlagerung zweier Funktionen $F_1$ und $F_2$ gebildet, wobei für die Beugungsgitter $B_H$ und $B_B$ die Funktionen unterschiedlich phasenverschoben überlagert werden. Die beiden Beugungsgitter $B_B$ und $B_H$ haben damit dieselbe Spatialfrequenz. Das eine Beugungsgitter besitzt jedoch eine symmetrische Profilform und beugt das Licht in die positive und negative Beugungsordnung in der gleichen Intensität, wohingegen das zweite Gitter eine asymmetrische Profilform besitzt und so beispielsweise die positiven Beugungsordnungen bevorzugt, so dass die positiven Beugungsordnungen heller als die negativen erscheinen.

DE100 44 465 A1 beschreibt einen Datenträger mit einer refraktiv wirkenden Prägestruktur und einem im Bereich der Prägestruktur ausgeführten zur Oberfläche des Datenträgers kontrastierenden Aufdruck. Aufdruck und Prägestruktur sind hierbei derart miteinander kombiniert, dass Teilbereiche des Aufdrucks bei senkrechter Betrachtung vollständig sichtbar sind, bei Schrägbetrachtung aber verdeckt werden, so dass sich bei senkrechter und schräger Betrachtung ein unterschiedlicher optischer Eindruck ergibt. Die Prägestruktur wird hierbei mit einer Stahltiefdruckplatte erzeugt.

WO 02/100653 A1 beschreibt, eine Vielzahl von Teilflächen, die mit dem bloßen Auge erkennbar sind, vor einer Hintergrundfläche zu platzieren. Hintergrundfläche und Teilflächen sind mit diffraktiven Reliefstrukturen belegt, deren Spatialfrequenz sich so unterscheidet, dass sich für einen Beobachter die Hintergrundflächen und Teilflächen farblich unterscheiden, während in einem Farbkopierer die Hintergrundflächen und Teilflächen im gleichen Farbstich bzw. Grauton wiedergegeben werden (Ausnutzung der unterschiedlichen spektralen Empfindlichkeit des menschlichen Auges und des Farbkopierers).

EP 0 520 363 A beschreibt ein Sicherheitselement mit zwei Sicherheitsmerkmalen. Eine periodische Anordnung (Reihen, Spalten) alphanumerischer Schriftzeichen, die aufgrund ihrer geringen Größe nur mithilfe eines Vergrößerungsgeräts aufgelöst werden können und durch ein Druckverfahren auf ein Substrat des Sicherheitselements aufgebracht werden, dient als ein erstes, mikroskopisches Sicherheitsmerkmal. Gruppen dieser Schriftzeichen sind relativ zu den anderen Schriftzeichen bereichsweise so phasenverschoben, dass sie in ihrer Gesamtheit ein zweites, makroskopisches Sicherheitsmerkmal ausbilden, das nur mittels des refraktiven Effekts eines Verifikationselements, bei dem eine Reihe von konvexen plan-zylindrischen Linsen im Abstand der Schriftzeichenreihen zueinander angeordnet sind, wahrnehmbar ist. Die beschriebenen Sicherheitsmerkmale sind also ein gedrucktes Muster, aber keine Reliefstruktur.

US 6 062 604 A beschreibt ein Sicherheitsdokument, das zur Verifikation des Sicherheitsdokuments entlang einer Mittellinie so gefaltet werden kann, dass ein in einem ersten Teil des Sicherheitsdokuments angeordnetes Fenster auf einem in einem zweiten Teil des Sicherheitsdokuments angeordneten Sicherheitselement zu liegen kommt. Das Zusammenwirken des Fensters mit dem Sicherheitselement erzeugt einen charakteristischen optischen Effekt. Es ist beschrieben, dass das Fenster ein Moiré-erzeugendes Linienmuster aufweisen kann, wobei die Linien parallel zu der Schmalseite des Sicherheitsdokuments verlaufen. Das Sicherheitselement weist ebenfalls ein Moiré-erzeugendes Linienmuster auf, wobei die Linien parallel zu der Längsseite des Sicherheitsdokuments verlaufen. Bei Überlagerung der beiden Linienmuster ergeben sich charakteristische, diagonal verlaufende dunkle Bänder ("Talbot fringes"). Es handelt sich also um eine Überlagerung von gedruckten Linienmustern (Intaglio, Tiefdruck, Offset) zur Erzeugung eines Moiré-Effekts, aber nicht um eine Reliefstruktur.

EP 1 102 208 A beschreibt ein Druckerzeugnis ("printed matter"), das ein Grundmuster aus parallelen Streifen mit gleichem Abstand p zueinander und ein darin verstecktes, zusätzliches Informationsmuster aufweist, ebenfalls aus äquidistanten Streifen mit derselben Frequenz und derselben Streifenbreite wie das Grundmuster bestehend, wobei das Informationsmuster um einen Versatz d zu dem Grundmuster verschoben ist. Wird auf das Druckerzeugnis ein auf einem transparenten Material aufgedrucktes Referenzmuster mit demselben Streifenmuster wie das Grundmuster aufgelegt, wird durch den resultierenden Moiré-Muster das zusätzliche Informationsmuster sichtbar. Es handelt sich hierbei um eine Überlagerung von gedruckten Linienmustern ("printed matter", "digital printer") zur Erzeugung eines Moiré-Effekts, aber nicht um eine Reliefstruktur.

Der Erfindung liegt nun die Aufgabe zugrunde, die Fälschungssicherheit von optischen Sicherheitselementen zu verbessern und ein System zur Visualisierung von versteckten Informationen anzugeben, das ein hohes Mass an Fälschungssicherheit gewährleistet.

Diese Aufgabe wird von einem optischen Sicherheitselement mit einer Substratschicht gelöst, wobei in einem von einer X- und einer Y-Achse aufgespannten Flächenbereich der Substratschicht eine durch Reliefparameter, Reliefform, Relieftiefe, Spatialfrequenz und Azimutwinkel, definierte Reliefstruktur zur Erzeugung eines optisch erkennbaren Effektes abgeformt ist, wobei ein oder mehrere von Reliefform und Azimutwinkel in dem Flächenbereich gemäss einer Parameter-Variations-Funktion variiert sind, der Flächenbereich in ein oder mehrere Musterbereiche und einen Hintergrundbereich geteilt ist und ein oder mehrere von Reliefform und Azimutwinkel in den ein oder mehreren Musterbereichen gemäss einer gegenüber der Parameter-Variations-Funktion des Hintergrundbereiches phasenverschobenen Parameter-Variations-Funktion variiert sind. Die Aufgabe wird weiter gelöst von einem optischen Sicherheitselement mit einer Substratschicht, wobei in einem von einer X- und einer Y-Achse aufgespannten Flächenbereich der Substratschicht eine durch Reliefparameter, Reliefform, Relieftiefe, Spatialfrequenz und Azimutwinkel, definierte Reliefstruktur zur Erzeugung eines optisch erkennbaren Effektes abgeformt ist, wobei die Spatialfrequenz in dem Flächenbereich gemäss einer periodischen Parameter-Variations-Funktion periodisch variiert ist, wobei die Periode kleiner als 300 $\mu$m ist, der Flächenbereich in ein oder mehrere Musterbereiche und einen Hintergrundbereich geteilt ist und die Spatialfrequenz in den ein oder mehreren Musterbereichen gemäss einer gegenüber der Parameter-Variations-Funktion des Hintergrundbereiches phasenverschobenen Parameter-Variations-Funktion variiert ist. Die Aufgabe wird weiter gelöst von einem optischen Sicherheitselement mit einer Substratschicht, wobei in einem von einer X- und einer Y-Achse aufgespannten Flächenbereich der Substratschicht eine durch Reliefparameter, Reliefform, Relieftiefe, Spatialfrequenz und Azimutwinkel, definierte Reliefstruktur zur Erzeugung eines optisch erkennbaren Effektes abgeformt ist, wobei die Reliefform und ein oder mehrere von Relieftiefe und Spatialfrequenz in dem Flächenbereich gemäss einer Parameter-Variations-Funktion variiert sind, der Flächenbereich in ein oder mehrere Musterbereiche und einen Hintergrundbereich geteilt ist und die Reliefform und ein oder mehrere von Relieftiefe und Spatialfrequenz in den ein oder mehreren Musterbereichen gemäss einer gegenüber der Parameter-Variations-Funktion des Hintergrundbereiches phasenverschobenen Parameter-Variations-Funktion variiert sind. Die Aufgabe wird weiter gelöst von einem optischen Sicherheitselement mit einer Substratschicht, wobei in einem von einer X- und einer Y-Achse aufgespannten Flächenbereich der Substratschicht eine durch Reliefparameter, Reliefform, Relieftiefe, Spatialfrequenz und Azimutwinkel, definierte Reliefstruktur zur Erzeugung eines optisch erkennbaren Effektes abgeformt ist, wobei der Azimutwinkel und ein oder mehrere von Relieftiefe und Spatialfrequenz in dem Flächenbereich gemäss einer Parameter-Variations-Funktion variiert sind, der Flächenbereich in ein oder mehrere Musterbereiche und einen Hintergrundbereich geteilt ist und der Azimutwinkel und ein oder mehrere von Relieftiefe und Spatialfrequenz in den ein oder mehreren Musterbereichen gemäss einer gegenüber der Parameter-Variations-Funktion des Hintergrundbereiches phasenverschobenen Parameter-Variations-Funktion variiert sind. Die Aufgabe wird weiter gelöst von einem optischen Sicherheitselement mit einer Substratschicht, wobei in einem von einer X- und einer Y-Achse aufgespannten Flächenbereich der Substratschicht eine durch Reliefparameter, Reliefform, Relieftiefe, Spatialfrequenz und Azimutwinkel, definierte Reliefstruktur zur Erzeugung eines optisch erkennbaren Effektes abgeformt ist, wobei die Reliefform, der Azimutwinkel und ein oder mehrere von Relieftiefe und Spatialfrequenz in dem Flächenbereich gemäss einer Parameter-Variations-Funktion variiert sind, der Flächenbereich in ein oder mehrere Musterbereiche und einen Hintergrundbereich geteilt ist und die Reliefform, der Azimutwinkel und ein oder mehrere von Relieftiefe und Spatialfrequenz in den ein oder mehreren Musterbereichen gemäss einer gegenüber der Parameter-Variations-Funktion des Hintergrundbereiches phasenverschobenen Parameter-Variations-Funktion variiert sind. Die Aufgabe wird weiter gelöst von einem optisches Sicherheitselement mit einer Substratschicht, wobei in einem von einer X- und einer Y-Achse aufgespannten Flächenbereich der Substratschicht eine durch Reliefparameter, Reliefform, Relieftiefe, Spatialfrequenz und Azimutwinkel, Reliefstruktur zur Erzeugung eines optisch erkennbaren Effektes abgeformt ist, wobei die Relieftiefe in dem Flächenbereich gemäss einer Parameter-Variations-Funktion variiert ist und die Spatialfrequenz in dem Flächenbereich gemäß einer periodischen Parameter-Variations-Funktion periodisch variiert ist, wobei die Periode kleiner als 300 $\mu$m ist, der Flächenbereich in ein oder mehrere Musterbereiche und einen Hintergrundbereich geteilt ist und die Relieftiefe und die Spatialfrequenz in den ein oder mehreren Musterbereichen gemäss einer gegenüber der Parameter-Variations-Funktion des Hintergrundbereiches phasenverschobenen Parameter-Variations-Funktion variiert sind. Die Erfindung wird weiter von einem System zur Visualisierung von versteckten Informationen mit einem derartigen optischen Sicherheitselement gelöst, das weiter ein Verifikationselement mit einem durch eine periodische Transmissions-Funktion definierten Verifikationsraster aufweist, dessen Periode der Periode der Parameter-Variations-Funktion entspricht.

Durch die Erfindung werden eine Vielzahl von Vorteilen erreicht: Zum einen ist es nicht möglich, die für die Erfindung notwendigen Refliefstrukturen mittels herkömmlicher holographischer Methoden zu generieren. Dies gilt ebenso für die durch ein erfindungsgemässes optisches Sicherheitselement generierten optischen Effekte. Auch diese lassen sich nicht mittels herkömmlicher holographischer Methoden imitieren. Eine Nachbildung mittels herkömmlicher holographischer Methoden ist demnach nicht möglich. Weiter werden neuartige optische Effekte generiert, wenn ein erfindungsgemässes optisches Sicherheitselement durch ein Verifizierungselement betrachtet wird oder ein Verifizierungselement über ein erfindungsgemässes optisches Sicherheitselement bewegt wird. So ergeben sich bei der Bewegung und/oder bei der Betrachtung aus unterschiedlichen Betrachtungswinkeln markante Farb- und Helligkeitswechsel. Diese neuartigen visuellen Effekte sind der Reliefstruktur eines efindungsgemässen optischen Sicherheitselements immanent, so dass eine Nachahmung durch andere, leichter herzustellende Reliefstrukturen nicht möglich ist. Somit wird von einem erfindungsgemässen optischen Sicherheitselement ein Sicherheitsmerkmal bereitgestellt, das sehr schwer zu kopieren oder zu imitieren ist, das andererseits jedoch von einem Benutzer einfach mittels eines zugeordneten Verifizierungselement verifiziert werden kann.

Vorteilhafte Ausgestaltungen sind in den Unteransprüchen bezeichnet.

Gemäss einem bevorzugten Ausführungsbeispiel der Erfindung wird die Reliefstruktur hierbei von einem Beugungsgitter gebildet, dessen Azimutwinkel periodisch gemäss der Parameter-Variations-Funktion in dem Flächenbereich variiert ist. Wird ein Verifikationselement auf einen Flächenbereich mit einer derartigen Reliefstruktur aufgebracht, so sind für den Betrachter zum einen abhängig von der Ausrichtung und Orientierung des Verifikationselements und zum anderen abhängig von der Betrachtungsrichtung unterschiedliche optische Effekte beobachtbar. Beispielsweise nimmt ein Betrachter einen mit einer derartigen Reliefstruktur versehenen Flächenbereich ohne Einsatz eines Verifizierungselements aus allen Betrachtungsrichtungen als homogenen Flächenbereich war. In einer ersten Ausrichtung des Verifizierungselements erscheinen Musterbereich und Hintergrundbereich je nach Betrachtungsrichtung in unterschiedlicher Helligkeit. In einer zweiten Ausrichtung oder bei Betrachtung aus einer anderen Betrachtungsrichtung ergibt sich der komplementäre Effekt.

Durch eine derartige Reliefstruktur wird demnach ein einfach erkennbares, aber sehr schwer nachahmbares Sicherheitsmerkmal in dem Flächenbereich generiert.

Die Parameter-Variations-Funktion kann den Azimutwinkel des Beugungsgitters hierbei abhängig von dem Wert der X-Achse periodisch variieren. Besonders vorteilhaft ist es, wenn die Parameter-Variations-Funktion den Azimutwinkel des Beugungsgitters hierbei derart variiert, dass sich das Beugungsgitter aus einer Vielzahl von schlangenlinienförmigen Linien zusammensetzt. Durch den Einsatz derartiger Parameter-Variations-Funktionen ergeben sich bei Verdrehen des Verifizierungselements auf dem optischen Sicherheitselement interessante optische Effekte die als zusätzliches Sicherheitsmerkmal dienen können. Um derartige Effekte zu erzielen, ist es z.B. zweckmässig, als Parameter-Variations-Funktion eine Sinusfunktion einzusetzen, die den Azimutwinkel des Beugungsgitters abhängig von dem Wert der X-Achse variiert.

Noch komplexere und damit noch schwerer nachahmbare Sicherheitsmerkmale lassen sich erzielen, wenn die Parameter-Variations-Funktion den Azimutwinkel des Beugungsgitters abhängig von dem Wert der X-Achse und abhängig von dem Wert der Y-Achse periodisch variiert. Hierdurch sind weitere Vorteile in Bezug auf die Fälschungssicherheit des erfindungsgemässen optischen Sicherheitselements erzielbar.

Die Parameter-Variations-Funktion kann demnach Reliefparameter abhängig von dem Wert der X-Achse, abhängig von dem Wert der Y-Achse sowie abhängig von dem Wert der X-Achse und abhängig von dem Wert der Y-Achse variieren.

Das oben beschriebene Beugungsgitter, dessen Azimutwinkel periodisch gemäss der Parameter-Variations-Funktion variiert wird, hat zweckmässlgerweise eine Spatialfrequenz von mehr als 300 Linien pro Millimeter, insbesondere 800 bis 1.200 Linien pro Millimeter, so dass klar erkennbare Helligkeitsunterschiede zu tage treten. Weiter ist es vorteilhaft, die Parameter-Variations-Funktion derart zu wählen, dass der mittlere Azimutwinkel in Bezug auf das Auflösungsvermögen des menschlichen Auges im Flächenbereich konstant ist. Dadurch wird ein homogenes Erscheinungsbild im Flächenbereich erzielt, solange kein Verifizierungselement auf den Flächenbereich aufgebracht wird.

Gemäss eines weiteren bevorzugten Ausführungsbeispiels der Erfindung ist die Reliefstruktur ein Beugungsgitter, dessen Spatialfrequenz periodisch gemäss der Parameter-Variations-Funktion variiert ist. Hierdurch ist es möglich, dass der Flächenbereich unterschiedliche Farberscheinungen und Farbwechsel im Musterbereich und im Hintergrundbereich zeigt, sofern ein Verifizierungselement aufgelegt ist. Diese unterschiedlichen Farberscheinungen und Farbwechsel sind für den Betrachter leicht erkennbar und sind deshalb besonders gut als Sicherheitselement einsetzbar.

Besonders gut erkennbare Effekte lassen sich beim Einsatz einer Parameter-Variations-Funktion erziehen, bei der die Spatialfrequenz des Beugungsgitters abhängig von dem Wert der X-Achse periodisch zwischen einer Maximalfrequenz, vorzugsweise 1.200 Linien pro Millimeter, und einer Minimalfrequenz, vorzugsweise 800 Linien pro Millimeter, variiert ist. Als Parameter-Variations-Funktionen werden hierbei vorzugsweise Sägezahn-, Dreieck- oder Sinus-Funktionen eingesetzt.

Auch hier ist es natürlich möglich, Parameter-Variations-Funktionen zu verwenden, die die Spatialfrequenz nicht nur abhängig von der X-Achse, sondern auch abhängig von der Y-Achse periodisch variieren. Durch derart komplexe Reliefstrukturen lassen sich Sicherheitsmerkmale erzielen, die noch schwerer nachahmbar sind.

Weiter ist es auch hier vorteilhaft, die Parameter-Variations-Funktion derart zu Auflösungsvermögen des menschlichen Auges konstant ist, und damit der Flächenbereich ohne den Einsatz eines Verifizierungselements einen homogenen Farbeindruck für den menschlichen Betrachter ergibt.

Gemäss weiterer bevorzugter Ausführungsbeispiele der Erfindung variiert die periodische Parameter-Variations-Funktion das Profil der Reliefstruktur, variiert so beispielsweise die Profiltiefe, die Breite der Vertiefungen oder die Profilform. Durch den Einsatz derartiger Parameter-Variations-Funktionen lassen sich Sicherheitsmerkmale erzielen, die Farbänderungen oder Helligkeitsänderungen des Musterbereiches oder des Hintergrundbereiches bei Einsatz eines Verifizierungselements zeigen. Variiert die Parameter-Variations-Funktion die Profilform periodisch zwischen asymmetrischen, bevorzugt zueinander spiegelsymmetrischen Reliefformen, so zeigen sich beim Einsatz eines Verifizierungselements abhängig von der Ausrichtung des Verifizierungselements unterschiedliche, blickwinkelabhängige Effekte im Hintergrundbereich und im Musterbereich. Damit lassen sich auch durch die Variation derartiger Parameter leicht erkennbare und sehr schwer nachahmbare Sicherheitsmerkmale in dem Flächenbereich generieren. Weiter ist es auch möglich, als Reliefstruktur eine Mattstruktur zu verwenden, deren Reliefparameter, beispielsweise Streuwinkel oder bevorzugte Streurichtung (bei anisotropen Mattstrukturen) gemäss der Parameter-Variations-Funktion variiert ist. Weiter ist es auch möglich, dass die Parameter-Variations-Funktion periodisch zwischen verschiedenartigen Reliefstrukturen, beispielsweise zwischen einer Mattstruktur und einem Beugungsgitter oder einer Makrostruktur, variiert.

Gemäss eines weiteren Ausführungsbeispiels der Erfindung ist es auch möglich, dass die Reliefstruktur eine Makrostruktur mit einer Spatialfrequenz von weniger als 300 Linien pro Millimeter ist. So wird beispielsweise das Licht abhängig von der Position des Verifizierungselements im Muster- und Hintergrundbereich in unterschiedliche Richtungen reflektiert, so dass eine ohne Einsatz eines Verifizierungselements homogene Fläche beim Einsatz eines Verifizierungselements blickwinkelabhängige Helligkeitsunterschiede von Muster- und Hintergrundbereich zeigt.

Natürlich ist es auch möglich, die oben aufgezeigten Möglichkeiten der Variation von Reliefparametern durch die Parameter-Variations-Funktion miteinander zu kombinieren und so beispielsweise mittels der periodischen Parameter-Variations-Funktion sowohl den Azimutwinkel als auch die Spatialfrequenz periodisch zu variieren. So lassen sich beispielsweise farb-, helligkeits- und blickwinkelabhängige Komponenten zu besonders eindrucksvollen Sicherheitsmerkmalen kombinieren.

Bei den oben aufgezeigten Ausführungsbeispielen der Erfindung hat es sich als besonders vorteilhaft erwiesen, die Periode der Parameter-Variations-Funktion kleiner als 300 $\mu$m zu halten, sie insbesondere dem Bereich von 20 bis 200 $\mu$m zu entnehmen. Hierdurch wird sichergestellt, dass ohne den Einsatz des Verifikationselements der Musterbereich von dem Hintergrundbereich vom menschlichen Betrachter nicht unterscheidbar ist.

Weitere Vorteile ergeben sich, wenn die Parameter-Variations-Funktion eine sowohl von der X-Achse als auch von der Y-Achse abhängige Funktion ist, die in mehr als eine Richtung periodisch ist, und weiter verschiedene Musterbereiche in Bezug auf verschiedene Periodizitäten phasenverschoben sind. Hierdurch ist es möglich, Bewegungseffekte beim Verdrehen des Verifizierungselements auf dem erfindungsgemässen optischen Sicherheitselement zu erzielen.

Als Verifikationselement wird im einfachsten Fall ein einfaches Linienraster mit einer der Periodizität der Parameter-Variations-Funktion entsprechenden Periode eingesetzt. Um die Fälschungssicherheit eines erfindungsgemässen Systems zur Visualisierung von versteckten Informationen weiter zu erhöhen, ist es hier auch möglich, ein komplexeres Linienraster zu verwenden, das beispielsweise aus einer Vielzahl schlangenlinienförmiger Linien oder aus einem zweidimensionalen Zufallsmuster besteht. Hierbei ist es dann auch erforderlich, die durch die Parameter-Variations-Funktion erzeugte mittlere Variation von Reliefparametem dem Flächenmuster dieses komplexeren Linienrasters anzupassen.

Weiter Verbesserungen der Fälschungssicherheit sind dadurch erzielbar, dass anstelle eines binären Verifikationsrasters ein Verifikationsraster verwendet wird, das durch eine nicht-binäre Transmissionsfunktion, beispielsweise durch eine sinusförmige Transmissionsfunktion, definiert ist. Die Visualisierung der versteckten Information erfordert demnach ein komplexes, individualisierbares Verifikationselement, wodurch sich die Fälschungssicherheit des Systems erhöht.

Im Folgenden wird die Erfindung anhand von mehreren Ausführungsbeispielen unter Zuhilfenahme der beiliegenden Zeichnungen beispielhaft erläutert.

| | |
|---|---|
| Fig. 1 | zeigt eine schematische Darstellung eines Querschnitts durch ein erfindungsgemässes optisches Sicherheitselement. |
| Fig. 2a | zeigt eine Funktionsskizze mit einer ausschnittsweisen Darstellung eines Flächenbereiches eines erfindungsgemässen optischen Sicherheitselements nach Anspruch 1. |
| Fig. 2b | zeigt einen Flächenbereich des erfindungsgemässen optischen Sicherheitselements nach Fig. 1. |
| Fig. 2c | zeigt eine Darstellung zur Verdeutlichung der prinzipiellen Funktionsweise des efindungsgemässen optischen Sicherheitselements nach Fig. 1. |
| Fig. 3 | zeigt eine schematische Darstellung eines Flächenbereiches eines erfindungsgemässen optischen Sicherheitselements für ein weiteres Ausführungsbeispiel der Erfindung. |
| Fig. 4 | zeigt eine schematische Darstellung eines Flächenbereiches eines erfindungsgemässen optischen Sicherheitselements für ein weiteres Ausführungsbeispiel der Erfindung. |
| Fig. 5a bis Fig. 5c | zeigen Darstellungen möglicher Parameter-Variations-Funktionen für ein weiteres Ausführungsbeispiel eines erfindungsgemässen optischen Sicherheitselements. |
| Fig. 5d | zeigt eine Darstellung eines Flächenbereiches eines erfindungsgemässen optischen Sicherheitselements für ein weiteres Ausführungsbeispiel der Erfindung. |
| Fig. 6a und Fig. 6b | zeigen eine Reliefstruktur bzw. einen Flächenbereich eines erfindungsgemässen optischen Sicherheitselements für ein weiteres Ausführungsbeispiel der Erfindung. |
| Fig. 7a bis Fig. 7e | zeigen Flächenbereiche bzw. Reliefstrukturen eines erfindungsgemässen optischen Sicherheitselements für ein weiteres Ausführungsbeispiel der Erfindung. |
| Fig. 8a bis Fig. 8e | zeigen einen Flächenbereich, einen Ausschnitt einer Parameter-Variations-Funktion und mehrere Reliefformen eines optischen Sicherheitselements für ein weiteres Ausführungsbeispiel der Erfindung. |
| Fig. 9a und Fig. 9b | zeigen schematische Darstellungen von Reliefstrukturen eines optischen Sicherheitselements für ein weiteres Ausführungsbeispiel der Erfindung. |
| Fig. 10a bis Fig. 10f | zeigen schematische Darstellungen verschiedener Verifizierungselements für ein erfindungsgemässes System zur Visualisierung versteckter Informationen. |
| Fig. 11 | zeigt eine Funktionsskizze eines erfindungsgemässen Systems zur Visualisierung von versteckten Informationen. |

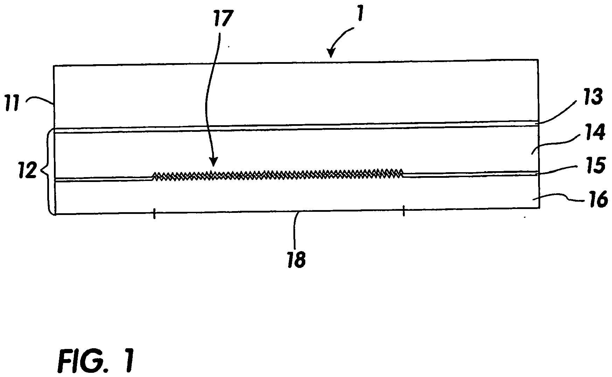

Fig. 1 zeigt eine Prägefolie 1, die eine Trägerfolie 11 und eine als optisches Sicherheitselement dienende Übertragungslage 12 aufweist. Die Übertragungslage 12 weist eine Ablöse- und/oder Schutzlackschicht 13, eine Replizierschicht 14, eine Reflexionsschicht 15 und eine Klebeschicht 16 auf. Die Trägerschicht 11 besteht beispielsweise aus einer Polyesterfolie einer Dicke von 12 $\mu$m bis 50 $\mu$m. Auf die Trägerfolie ist die Ablöse- und/oder Schutzlackschicht 13 in einer Dicke von 0,3 bis 1,2 $\mu$m sowie die Replizierschicht 14 aufgebracht. Auf die Ablöse- und/oder Schutzlackschicht 13 könnte hierbei auch verzichtet werden.

Bei der Replizierschicht 14 handelt es sich vorzugsweise um ein transparentes, thermoplastisches Kunststoffmaterial, das beispielsweise mittels eines Druckverfahrens auf den von der Trägerfolie 11 und der Schutzlack- und/oder Ablöseschicht 13 gebildeten Folienkörper aufgebracht wird. Nach Trocknung wird in die Replizierschicht mittels eines Prägewerkzeuges in dem Bereich 18 eine Reliefstruktur 17 repliziert. Es ist jedoch auch möglich, dass die Replikation mittels eines UV-Replikationsverfahrens durchgeführt wird, bei dem ein UV-Replizierlack auf den von der Trägerfolie 11 und der Ablöse- und/oder Schutzlackschicht 13 gebildeten Folienkörper aufgetragen und anschliessend zur Replikation der Reliefstruktur 17 partiell mit UV-Licht bestrahlt wird. Nach der Replikation der Reliefstruktur 17 in die Replizierschicht 14 erhärtet der Replizierlack durch Vernetzen oder in sonstiger Weise.

Auf die Replizierschicht 14 wird nun eine dünne Reflexionsschicht 15 aufgebracht. Bei der Reflexionsschicht 15 handelt es sich vorzugsweise um eine dünne, aufgedampfte Metallschicht oder um eine HRI-Schicht (HRI = High Refraction Index). Als Materialien für eine HRI-Schicht kommen beispielsweise $TiO_2$, ZnS oder $Nb_2O_5$ in Frage. Als Material für die Metallschicht kommt im wesentlichen Chrom, Aluminium, Kupfer, Eisen, Nickel, Silber, Gold oder eine Legierung mit diesen Materialien in Frage. Weiter kann Anstelle einer derartigen metallischen oder dielektrischen Reflexionsschicht eine Dünnfilmschichtfolge mit mehreren dielektrischen oder dielektrischen und metallischen Schichten eingesetzt werden.

Auf den so gebildeten Folienkörper wird nun die Klebeschicht 16 aufgebracht, die beispielsweise aus einem thermisch aktivierbaren Kleber besteht.

Zum Aufbringen des optischen Sicherheitselements auf einem Sicherheitsdokument oder einem sonstigen zu sichernden Gegenstand wird die Prägefolie mit der Übertragungslage 12 voran auf das Sicherheitsdokument bzw. den zu sichernden Gegenstand aufgebracht und dabei die Trägerfolie 11 von der Übertragungslage 12 abgezogen und entfernt.

Es ist natürlich auch möglich, dass ein erfindungsgemässes optisches Sicherheitselement Teil einer Transfer-, Sticker oder Laminierfolie ist oder von einer Präge-, Sticker-, Transfer- oder Laminierfolie gebildet wird. Weiter ist es natürlich auch möglich, dass ein erfindungsgemässes optisches Sicherheitselement neben den in Fig. 1 gezeigten Schichten 13, 14, 15 und 16 weitere Schichten aufweist. Derartige Schichten können beispielsweise (farbige) Dekorschichten oder Schichten eines Dünnfilm-Schichtsystems ein, das blickwinkelabhängige Farbverschiebungen mittels Interferenz erzeugt.

Weiter ist es auch möglich, die Reflexionsschicht 15 nur partiell auszuführen oder auf sie ganz zu verzichten, so dass das optische Sicherheitselement als transparentes und nicht als reflektives optisches Sicherheitselement wirkt. Auch könnte auf die Klebeschicht 16 verzichtet werden.

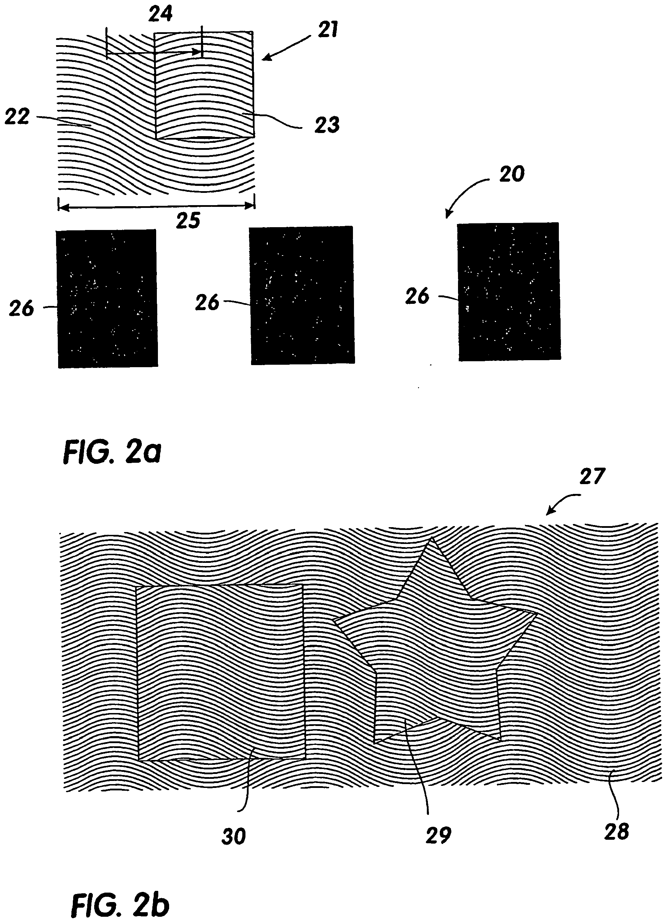

Die genaue Form der Reliefstruktur 17 sowie die von der Reliefstruktur 17 erzeugten optischen Effekte werden nun im Folgenden anhand der Figuren Fig. 2a bis Fig. 2c erläutert:

Fig. 2a zeigt einen Teil-Flächenbereich 21 mit einem Musterbereich 23 und einem Hintergrundbereich 22, sowie einen Teilausschnitt eines Verifizierungselements 20 mit drei Linienrastern 26. Fig. 2b zeigt einen Flächenbereich 27 mit einem Hintergrundbereich 28 und zwei Musterbereichen 29 und 30, wobei der Teil-Flächenbereich 21 einen Ausschnitt aus dem Flächenbereich 27 zeigt.

Wie aus den Figuren Fig. 2a und Fig. 2b erkennbar, ist in dem Flächenbereich 27 bzw. in dem Teil-Flächenbereich 21 eine Reliefstruktur abgeformt, deren Azimutwinkel abhängig von dem Wert der X-Achse schlangenlinienförmig variiert ist.

Die Reliefstruktur wird vorzugsweise mit einem Elektronenstrahl-Lithographiesystem, das Perioden im Sub-Mikron Bereich bis Mikron Bereich ermöglicht, oder mittels eines photolithographischen Prozesses, der Perioden kleiner als 1 $\mu$m ermöglicht, in die Replizierschicht 14 abgeformt. Die Spatialfrequenz der Reliefstruktur beträgt hierbei etwa 1.000 Linien pro Millimeter. Die Periode der Parameter-Variations-Funktion, die den Azimutwinkel der Reliefstruktur 17 periodisch zwischen +40 Grad und -40 Grad variiert, beträgt vorzugsweise 20 bis 300 $\mu$m. Bei der Parameter-Variations-Funktion handelt es sich um eine Sinus-Funktion. Es ist natürlich auch möglich, eine andere periodische Funktion als Parameter-Variations-Funktion zu verwenden oder andere minimale/maximale Azimutwinkel vorzusehen.

Weiter dienen die Darstellungen in Fig. 2a und Fig. 2b lediglich zur Erläuterung des Funktionsprinzips und sind nicht massstäblich ausgeführt. Üblicherweise haben die Musterbereiche 23, 30 und 29 Abmessungen, die einem Vielfachen der Periode der Parameter-Variations-Funktion entspricht und bewegen sich jedenfalls in einem Bereich, der für das menschliche Auge auflösbar ist.

Der Teilbereich 23 hat eine Breite, die der Länge einer Periode 25 der Parameter-Variations-Funktion entspricht, und so beispielsweise 100 $\mu$m breit ist. Wie in Fig. 2a und Fig. 2b erkennbar, wird der Azimutwinkel der Reliefstruktur 17 in den Hintergrundbereichen 22 und 28 und den Musterbereichen 23, 30 und 29 durch gegeneinander um 180 Grad phasenverschobene Parameter-Variations-Funktionen, die ansonsten identisch sind, variiert. Wie in Fig. 2d angedeutet, ist so die in dem Musterbereich 23 angewendete Parameter-Variations-Funktion gegenüber der im Hintergrundbereich

## EP 1 644 871 B1

22 angewendeten Parameter-Variations-Funktion um eine halbe Periodenlänge 24, also um 50 $\mu$m, gegeneinander verschoben. Eine Phasenverschiebung von 180 Grad ermöglicht einen besonders großen Kontrast zwischen Musterbereich und Hintergrundbereich. Natürlich ist es hierbei auch möglich, von der Phasenverschiebung um 180 Grad etwas abzuweichen. Weiter kann es auch Vorteile mit sich bringen, in dem ein oder anderen Musterbereich erheblich von einer einer Phasenverschiebung von 180 Grad abzuweichen und beispielsweise eine Phasenverschiebung von 45 Grad oder 135 Grad vorzusehen. So ist es beispielsweise möglich, versteckte Graustufenbilder zu realisieren, bei denen die Graustufe mittels der Phasenverschiebung kodiert ist.

Ohne Einsatz des Verifizierungselements 20 erscheint nun dem menschlichen Betrachter der Flächenbereich 27 homogen, da der mittlere, für das menschliche Auge auflösbare Azimutwinkel in den Musterbereichen 29 und 30 und in dem sie umgebenden Hintergrundbereich 28 konstant ist. Für den Betrachter ergibt sich dann in dem Flächenbereich 28 ein homogener, blickwinkelabhängiger optischer Effekt, der von dem von der Parameter-Variations-Funktion abgedeckten Azimutwinkelbereich sowie von der gewählten Spatialfrequenz der Reliefstruktur 17 abhängig ist.

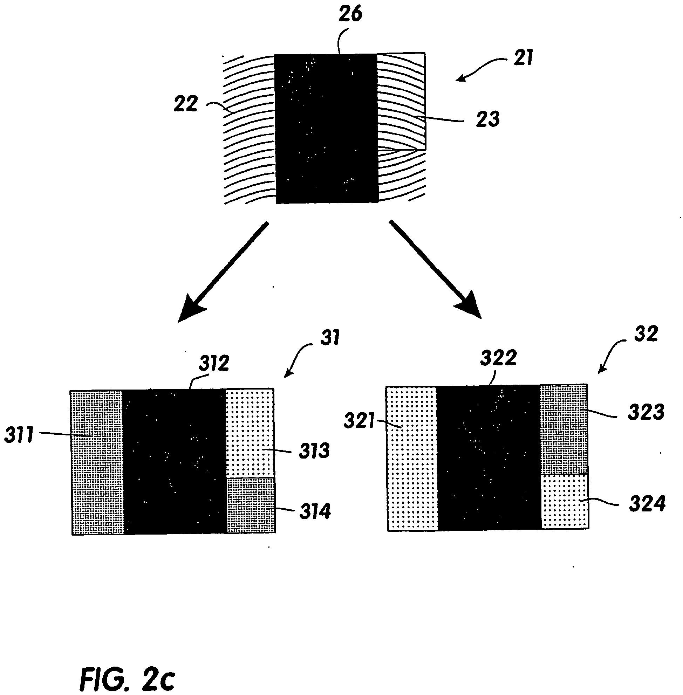

Fig. 2c verdeutlicht nun die Situation, in der das Verifizierungselement 20 auf dem Teil-Flächenbereich 21 plaziert ist. Die Lichtquelle liegt in der Y-Z Ebene, so dass der k-Vektor des Lichts keine Y-Komponente besitzt.

Fig. 2c zeigt den Teil-Flächenbereich 21, das Linienraster 26, den Musterbereich 23 und den Hintergrundbereich 22. Weiter zeigt Fig. 2c einen optischen Eindruck 31 eines Betrachters, der die Teilfläche 21 von der linken Seite betrachtet und einen optischen Eindruck 32 eines Betrachters, der den Teil-Flächenbereich von der rechten Seite betrachtet.

Wie in Fig. 2c gezeigt, decken die Rasterlinien 26 des Verifizierungselements 20 nur die Flächenbereiche des Hintergrundbereiches 22 mit negativen Azimutwinkeln und nur Flächenbereiche des Musterbereiches 21 mit positiven Azimutwinkeln ab. Wenn der Teil-Flächenbereich 21 von einem negativen Azimutwinkel, also von links betrachtet wird, ist demnach der Hintergrundbereich 22 dunkel und der Musterbereich 23 hell. Wenn der Teilbereich 21 von der positiven Azimutwinkel-Seite, also von rechts, betrachtet wird, ist der Hintergrundbereich 22 hell und der Musterbereich 23 dunkel.

Der optische Eindruck 31 zeigt somit eine Abdeckung 312 durch die Rasterlinie 26, dunkle Bereiche 311 und 314 im Bereich des Hintergrundbereichs 22 und einen hellen Bereich 313 im Bereich des Musterbereichs 23. Im Gegenzug zeigt der optische Eindruck 23 eine Abdeckung 322 durch die Rasterlinie 26 und helle Bereiche 321 und 324 im Bereich des Hintergrundbereichs 22 und einen dunklen Bereich 323 im Bereich des Musterbereichs 23.

Bei einer realen Betrachtung verschwinden die Abdeckungen 312 und 322, da sich die Periode der Parameter-Variations-Funktion in einer Grössenordnung bewegt, die vom menschlichen Auge nicht mehr auflösbar ist. Demnach ergeben sich für den Betrachter von der linken Seite helle Musterbereiche und dunkle Hintergrundbereiche und für den Betrachter von der rechten Seite dunkle Musterbereiche und ein heller Hintergrundbereich. Wird das Verifizierungselement 20 um eine halbe Periode der Parameter-Variations-Funktion verschoben, so ergibt sich der gegenteilige Eindruck, also ein heller Hintergrundbereich und dunkle Musterbereiche bei der Betrachtung von der linken Seite und ein dunkler Hintergrundbereich und helle Musterbereiche bei der Betrachtung von der rechten Seite. Wird das optische Sicherheitselement demnach durch das Verifizierungselement 20 betrachtet, wird eine dynamische Kontrolle des Helligkeits-Kontrastes realisiert.

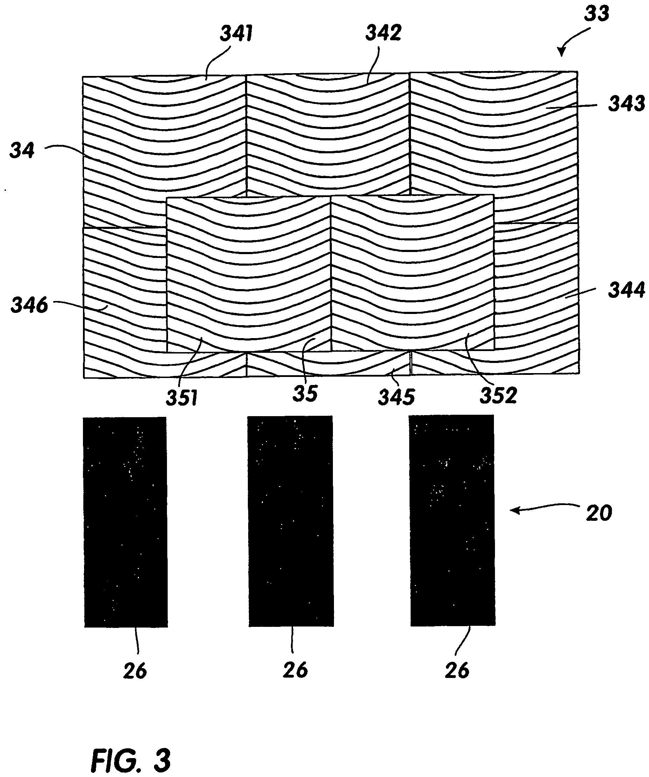

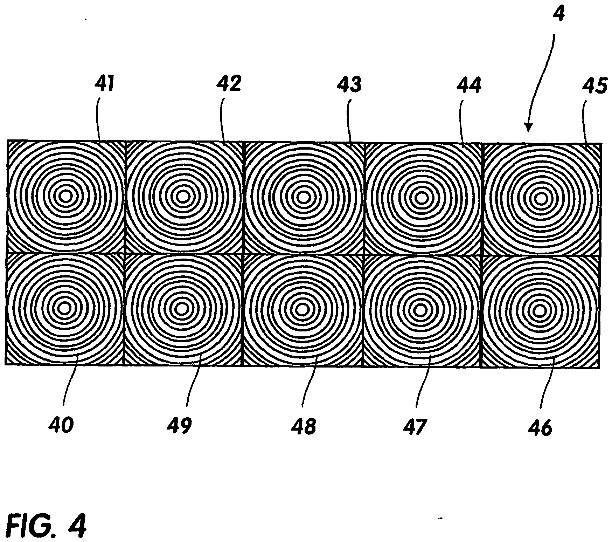

Fig. 3 und Fig. 4 zeigen nun zwei weitere Ausführungsbeispiele der Erfindung, bei denen der Azimutwinkel der Reliefstruktur 17 durch eine periodische Parameter-Variations-Funktion variiert wird.

Fig. 3 zeigt einen Flächenbereich 33 mit einem Hintergrundbereich 34 und einem Musterbereich 35 sowie einen Teilbereich des Verifizierungselements 20 mit mehreren Rasterlinien 26.

Die Periode der Parameter-Variations-Funktion nach Fig. 3 beträgt 50 $\mu$m, so dass der Linienabstand der Rasterlinien 26 hier auch 50 $\mu$m beträgt. Wie in Fig. 3 gezeigt, wird der Hintergrundbereich 34 von sechs Teilbereichen 341 bis 346 gebildet. Die Teilbereiche 341 bis 346 haben jeweils die Breite einer Periode der Parameter-Variations-Funktion, bei er es sich um eine periodisch aus parabolischen Teilstücken zusammengesetzte Funktion handelt. Der Musterbereich 35 wird von zwei Teilflächen 351 und 352 gebildet, die jeweils ebenfalls die Breite einer Periode der Parameter-Variations-Funktion besitzen.

Wie bei dem Ausführungsbeispiel nach Fig. 2a und Fig. 2b, werden von den Rasterlinien 26 entweder die negativen Azimutwinkel-Bereiche des Hintergrundbereiches 34 und die positiven Azimutwinkel-Bereiche des Musterbereiches 35 oder die positiven Azimutwinkel-Bereiche des Hintergrundbereiches 34 und die negativen Azimutwinkel-Bereiche des Musterbereiches 35 abgedeckt. Damit ergibt sich der anhand von Fig. 2c erläuterte Effekt, wobei im Vergleich zu dem Flächenbereich 27 aufgrund der sich unterscheidenden Parameter-Variations-Funktion das Erscheinungsbild aus verschiedenen Betrachtungsrichtungen etwas unterschiedlich ist.

Fig. 4 zeigt einen Flächenbereich 4, der sich aus mehreren Teilbereichen 40 bis 49 zusammensetzt. Die Flächenbereiche 40 bis 49 werden jeweils von identischen Beugungsstrukturen gebildet, die jeweils eine Vielzahl von kreisförmig um das Zentrum der jeweiligen Teilfläche angeordneten konzentrischen Ringe aufweisen. Die Breite und Höhe einer Teilfläche beträgt etwa 100 $\mu$m, die Spatialfrequenz der Beugungsstruktur etwa 1.000 Linien pro Millimeter.

Damit zeigt Fig. 4 ein Beispiel einer periodischen Parameter-Variations-Funktion, bei der der Azimutwinkel der Beugungsstruktur 17 abhängig von dem Wert der X- und Y-Achse periodisch variiert ist. Diese Funktion zeigt damit eine Periodizität sowohl in die X- als auch in die Y-Achse, so dass versteckte Informationen bei unterschiedlicher Orientierung des Verifizierungselements 20 auslesbar sind. Musterbereiche werden nun in dem Flächenbereich 4 nach der in Fig. 3 gezeigten Art plaziert, so dass die Teilflächen 41 bis 46 von identischen, aber phasenverschobenen Teilflächen überdeckt werden. Hierbei ist eine Phasenverschiebung der Teilflächen eines möglichen Musterbereiches sowohl in X- als auch in Y-Richtung möglich, je nach Wahl dieser Phasenverschiebung ist der Musterbereich dann bei Ausrichtung des Gitters in Y-Richtung bzw. in X-Richtung auslesbar.

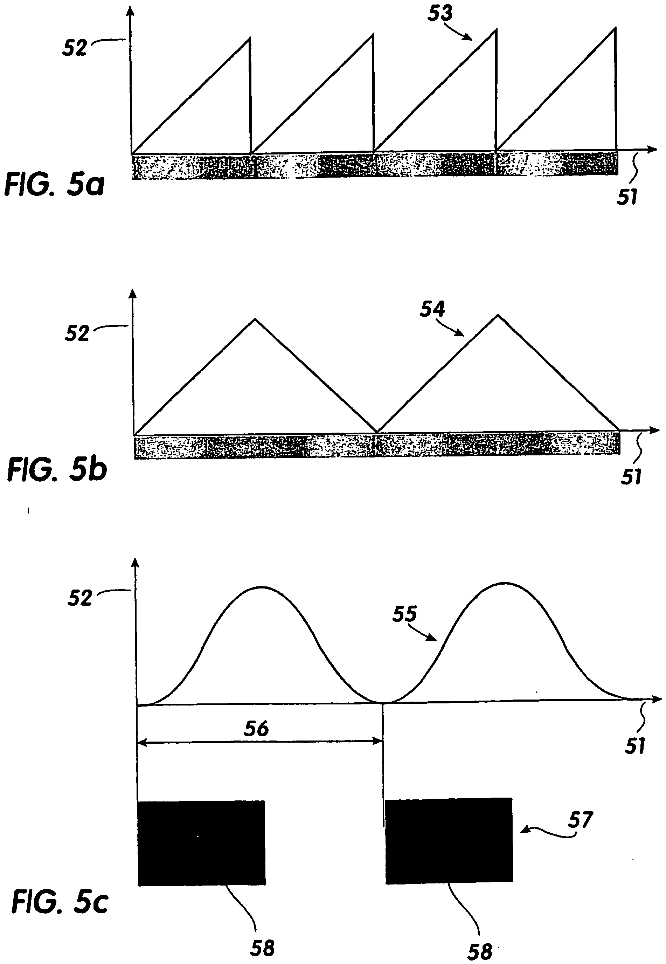

Im Folgenden wird anhand der Figuren Fig. 5a bis Fig. 5d ein weiteres Ausführungsbeispiel der Erfindung erläutert, bei dem die Reliefstruktur ein Beugungsgitter ist, dessen Spatialfrequenz periodisch gemäss der Parameter-Variations-Funktion variiert ist.

Fig. 5a bis Fig. 5c zeigen drei verschiedene Parameter-Variations-Funktionen 53, 54 und 55, die eine Spatialfrequenz 52 abhängig von einem Wert 51 der X-Achse des Flächenbereiches variieren. Der k-Vektor der in den Figuren 5a bis 5c beschriebenen Reliefstrukturen ist in Richtung der Y-Achse orientiert, so dass die Rillen der Reliefstruktur parallel zur X-Achse orientiert sind. Die Rasterlinien 58 sind ebenfalls parallel zur X-Achse orientiert.

Die Parameter-Variations-Funktion 53 ist eine sägezahnförmige Funktion, die die Spatialfrequenz im Bereich von 800 Linien pro Millimeter bis 1.200 Linien pro Millimeter sägezahnförmig variiert. Die Periode der Parameter-Variations-Funktion beträgt 50 μm. Bei den Minima der Parameter-Variations-Funktion 53, also bei einem Wert von 800 Linien pro Millimeter, ergibt sich ein roter Farbeindruck, der sich dann zum nächsten Maxima bei 1.200 Linien pro Millimeter linear in einen blauen Farbeindruck wandelt. Innerhalb einer Periode ändert sich demnach der Farbeindruck von rot nach blau. Die Farbeindrücke beziehen sich hierbei auf eine typische Beleuchtungs/Betrachtungswinkelkombination.

Die Parameter-Variations-Funktion 54 ist eine Dreieck-Funktion mit einer Periode von 100 μm, die die Spatialfrequenz des Beugungsgitters von einem Minimalwert von 800 Linien pro Millimeter zu einem Maximalwert von 1.200 Linien pro Millimeter und zurück variiert. Damit ändert sich innerhalb einer Periode der Farbeindruck von rot zu blau und wieder zurück von blau nach rot.

Die Parameter-Variations-Funktion 55 ist eine Sinus-Funktion mit einer Periode von 100 μm, die die Spatialfrequenz des Beugungsgitters abhängig vom Wert der X-Achse von einem Minimalwert von 800 Linien pro Millimeter in einen Maximalwert von 1.200 Linien pro Millimeter und zurück variiert. Damit ergibt sich innerhalb einer Periode ein Farbeindruck von rot nach blau und zurück nach rot.

Da die Periode der Parameter-Variations-Funktionen 53 bis 55 unterhalb des Auflösungsvermögens des menschlichen Auges liegen, ergibt sich für den Betrachter innerhalb des Flächenbereiches ein einheitlicher Farbeindruck, der sich aus der Mischung des durch die Parameter-Variations-Funktion bestimmten Farbspektrums ergibt. Wird nun ein Verifizierungselement 57 mit den Rasterlinien 58, die einen der Periode der Parameter-Variations-Funktion entsprechenden Linienabstand 56 besitzen, auf dieses Beugungsgitter aufgebracht, so wird jeweils von den Rasterlinien 58 ein bestimmter Teil des Farbspektrums abgedeckt, so dass sich der Farbeindruck bei Bewegung des Verifizierungselements über das Beugungsgitter ändert.

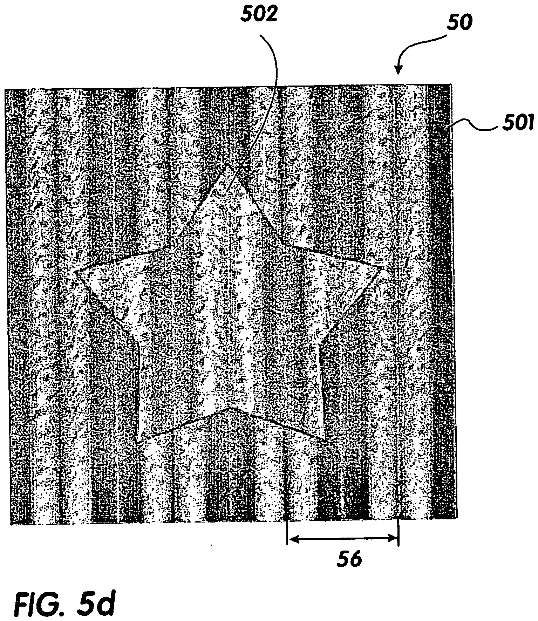

Fig. 5d zeigt nun einen Flächenbereich 50 mit einem Hintergrundbereich 501 und einem Musterbereich 502. In dem Hintergrundbereich 501 ist die Spatialfrequenz der Reliefstruktur gemäss der Parameter-Variations-Funktion 54 variiert. In dem Musterbereich 502 ist die Spatialfrequenz der Reliefstruktur mit einer um eine halbe Periode, also um 50 μm, phasenverschobene Parameter-Variations-Funktion 54 variiert. Wird nun das Verifikationselement 57 mit dem Linienraster-Abstand 56 über den Flächenbereich 50 bewegt, so werden in dem Hintergrundbereich 501 und dem Musterbereich 502 jeweils unterschiedliche Farbbereiche abgedeckt, so dass der Musterbereich 502 für den menschlichen Betrachter einen anderen Farbeindruck als der Hintergrundbereich 501 vermittelt. Wird so das Verifikationselement 57 über den Musterbereich 50 bewegt, so ergibt sich beispielsweise zuerst der Eindruck eines blauen Musterbereiches und eines roten Hintergrundbereiches, der dann mit Bewegung des Verifikationselements stetig in einen roten Musterbereich vor einem blauen Hintergrundbereich übergeht.

Wie bereits oben in Bezug auf die Fig. 2b ausgeführt, dient Fig. 5d lediglich zur Erläuterung des Funktionsprinzips. Üblicherweise haben Musterbereiche eine Ausdehnung, die eine Vielzahl von Perioden der Parameter-Variations-Funktion umfasst und in einer Grössenordnung liegt, die für das menschliche Auge auflösbar ist.

Durch die Parameter-Variations-Funktion wird demnach zum einen der homogene Farbeindruck bestimmt, der sich in dem Fall ergibt, in dem kein Verifikationselement auf dem Flächenbereich 50 aufgelegt ist. Weiter wird durch die Parameter-Variations-Funktion bestimmt, wie sich die Farbe beim Verschieben des Verifikationselement über den Flächenbereich 50 ändert (z.B. abrupte Farbänderungen bei Verwendung der Parameter-Variations-Funktion 53), was als zusätzliches Sicherheitsmerkmal dient.

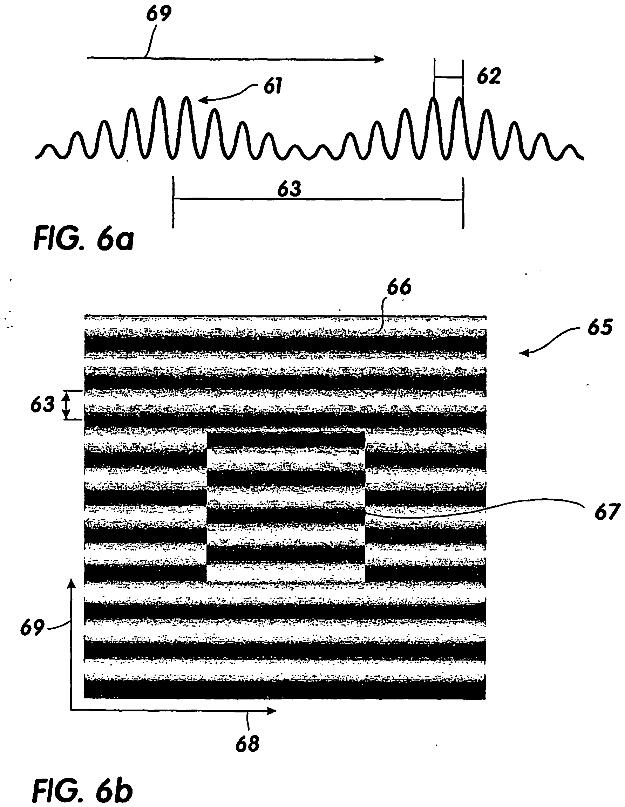

Anhand von Fig. 6a und Fig. 6b wird nun ein weiteres Ausführungsbeispiel der Erfindung erläutert, bei dem die Reliefstruktur ein Beugungsgitter ist, dessen Profiltiefe periodisch gemäss der Parameter-Variations-Funktion variiert ist.

Fig. 6a zeigt eine Reliefstruktur 61, deren Profiltiefe bei konstanter Spatialfrequenz durch eine periodische Parameter-Variations-Funktion mit einer Periode 63 variiert ist.

Bei der Reliefstruktur 61 handelt es sich bevorzugt um eine Beugungsstruktur erster Ordnung (Spatialfrequenzbereich bewegt sich im Bereich der Wellenlänge) oder eine Beugungsstruktur nullter Ordnung (Linienabstand ist kleiner als die Wellenlänge des Lichtes). Die Profiltiefe wird durch die periodische Parameter-Variations-Funktion im Vergleich zu der Spatialfrequenz des Beugungsgitters langsamer abhängig von dem Wert der X-Achse oder abhängig von dem Wert der X- und Y-Achse verändert. Die Periode der Parameter-Variations-Funktion beträgt zwischen 10 $\mu$m und 100 $\mu$m und hat bevorzugt einen Wert um 100 $\mu$m.

Die Reliefstruktur 61 nach Fig. 6a hat so beispielsweise eine Spatialfrequenz von 1.000 Linien pro Millimeter, der Linienabstand 62 beträgt so 1 $\mu$m. Die Periode 63 beträgt 100 $\mu$m und die Profiltiefe wird periodisch abhängig vom Wert einer Y-Achse 69 zwischen 0 nm und beispielsweise 150 nm variiert.

In Fig. 6b ist nun ein von einer X-Achse 68 und der Y-Achse 69 aufgespannter Flächenbereich 65 mit einem Hintergrundbereich 66 und einem Musterbereich 67 dargestellt, in dem die Reliefstruktur 61 wie in Fig. 6a dargestellt periodisch in Richtung der Y-Achse variiert ist. Wie in Fig. 6b gezeigt, ist in dem Musterbereich 67 die Parameter-Variations-Funktion um eine halbe Periode, also um 50 $\mu$m, gegenüber der Parameter-Variations-Funktion des Hintergrundbereiches 66 verschoben.

Wird nun der Flächenbereich 65 durch ein Verifizierungselement mit einem Linienraster von 100 $\mu$m betrachtet, so werden in dem Hintergrundbereich 66 und dem Musterbereich 67 Bereiche mit unterschiedlichen Profiltiefen abgedeckt, so dass der Musterbereich 67 nicht mehr homogen erscheint. Beim Auflegen des Verifizierungselements ergibt sich somit ein Helligkeitskontrast zwischen Musterbereich und Hintergrundbereich, der sich bei Verschieben des Verifizierungselements ändert. Werden so von dem Linienraster die Bereiche des Hintergrundbereiches um 150 nm Profiltiefe abgedeckt, so erscheint der Hintergrundbereich dunkler, da der im Hintergrundbereich erzeugte optische Effekt durch Profiltiefen um die 0 nm bestimmt wird. Umgekehrt erscheint in dieser Position des Verifizierungselements der Musterbereich heller. Beim Verschieben des Verifizierungselements ändert sich dieser Effekt dann langsam in das Gegenteil, so dass der Hintergrundbereich heller und der Musterbereich dunkler erscheint.

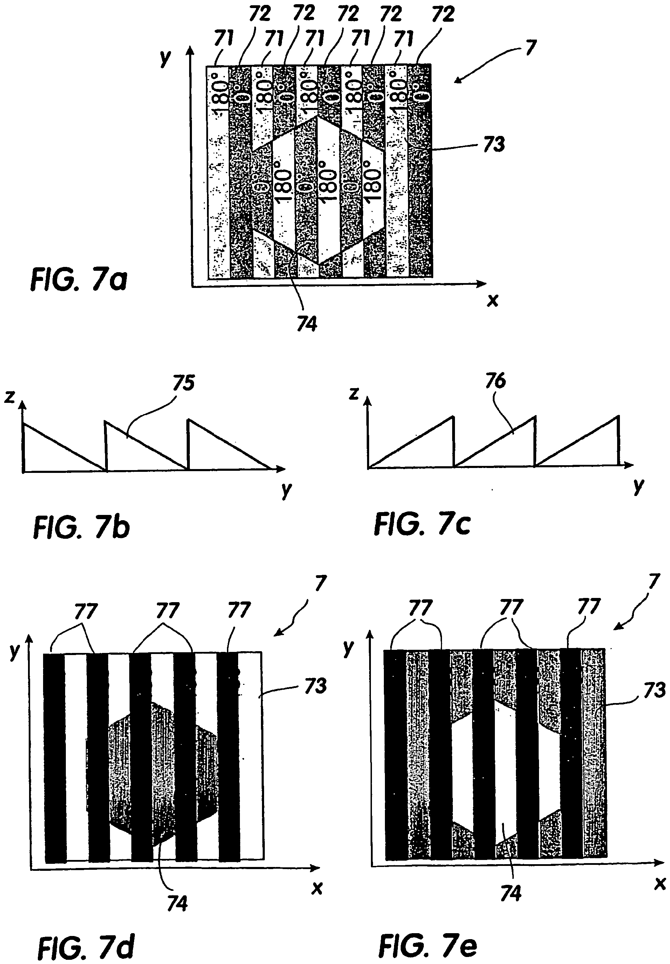

Anhand der Fig. 7a bis Fig. 7e wird nun ein weiteres Ausführungsbeispiel der Erfindung erläutert, bei dem die Reliefform der Reliefstruktur periodisch gemäss der Parameter-Variations-Funktion variiert ist.

Fig. 7a zeigt einen Flächenbereich 7 mit einem Musterbereich 74 und einem Hintergrundbereich 73. Der Flächenbereich 7 weist weiter in Richtung der X-Achse eine periodische Abfolge von Teilbereichen 71 und 72 auf, wobei in Teilbereichen 71 im Hintergrundbereich eine Reliefform 76 und im Musterbereich eine Reliefform 75 sowie in Teilbereichen 72 im Hintergrundbereich die Reliefform 75 und im Musterbereich die Reliefform 76 abgeformt ist.

Die Breite der Teilbereiche 71 und 72 beträgt weniger als 300 $\mu$m, so dass die Teilbereiche 71 und 72 nicht vom menschlichen Auge auflösbar sind. Die Reliefformen 75 und 76 stellen asymmetrische, zueinander gespiegelte Strukturen dar, so dass die Profilform 76 auch als Reliefstruktur 75 betrachtet werden kann, bei der der Azimutwinkel um 180 Grad gegenüber der Reliefform 75 gedreht ist. Typische Spatialfrequenzen der Profilformen 75 und 76 liegen im Bereich von 1.200 Linien pro Millimeter bis 150 Linien pro Millimeter.

Die Breite der Teilbereiche 71 und 72 beträgt so beispielsweise jeweils 50 $\mu$m, so dass die Periode der Parameter-Variations-Funktion des Flächenbereichs 7 100 $\mu$m beträgt. Die Spatialfrequenz der Profilformen 75 und 76 beträgt beispielsweise 1.150 Linien pro Millimeter.

Wird nun der Flächenbereich 7 ohne Verwendung eines Verifikationselementes betrachtet, ergibt sich im Flächenbereich 7 für den menschlichen Betrachter ein homogener Eindruck, der dem eines sinusförmigen Beugungsgitters mit einer Spatialfrequenz der Profilformen 75 und 76, also von 1.150 Linien pro Millimeter, entspricht.

Wenn ein Verifizierungselement mit einer Periode, die der Periode der Parameter-Variations-Funktion entspricht oder nahezu entspricht, auf den Flächenbereich 7 aufgelegt wird, wird der Musterbereich 74 sichtbar. Je nachdem, ob die Rasterlinien die Profilformen 75 oder 76 des Musterbereiches 74 abdecken, ergibt sich für den Betrachter ein dunkler Musterbereich vor einem hellen Hintergrundbereich bzw. ein heller Musterbereich vor einem dunklen Hintergrundbereich. Wir der Flächenbereich um 180 Grad gedreht, ergibt sich für den Betrachter der komplementäre Eindruck.

So ergibt sich beispielsweise bei Abdeckung der Teilbereiche 71 durch Rasterlinien 77 im Flächenbereich 7 der in Fig. 7d dargestellte Effekt, dass der Musterbereich 74 dunkel und der Hintergrundbereich 73 hell erscheint. Wird der Flächenbereich 7 um 180 Grad gedreht, so ergibt sich die in Fig. 7e gezeigte Situation eines hellen Musterbereiches 74 vor einem dunklen Hintergrundbereich 73. Da die Periode der Parameter-Variations-Funktion geringer als das Auflösungsvermögen des menschlichen Auges ist, sind die Rasterlinien 77 für den Betrachter nicht sichtbar, so dass bei der Betrachtung des Flächenbereiches in der Situation nach Fig. 7d für den Betrachter der dunkle Flächenbereich 74 vor dem hellen Hintergrundbereich 73 und in der Situation nach Fig. 7e der helle Musterbereich 74 vor dem dunklen Hintergrundbereich 73 sichtbar ist. Dieser zusätzliche Kipp-Effekt bei Betrachtung aus um 180° gegeneinander gedrehten Richtungen bildet ein zusätzliches Sicherheitsmerkmal.

Natürlich ist es auch möglich, dass die Parameter-Variations-Funktion in den Teilbereichen 71 und 72 zwischen beliebigen anderen asymmetrischen Profilformen variiert ist. Weiter ist es auch möglich, dass die Parameter-Variations-Funktion keine binäre Funktion ist, die zwischen zwei unterschiedlichen Profilformen unterscheidet, sondern dass beispielsweise der Neigungswinkel der Profilform 75 linear gemäss einer Sinus-Funktion variiert ist. Auch hierdurch ergeben sich zusätzliche Sicherheitsmerkmale, die zur Erhöhung der Fälschungssicherheit beitragen.

Weiter ist auch allgemein die Verwendung von Parameter-Variations-Funktionen möglich, bei denen sich die Reliefform periodisch ändert. Das Reliefprofil kann so beispielsweise durch eine Funktion

$$f_3(x) = f_1(x) + f_2(x)$$

dargestellt werden, bei der

$$f_1(x) = b \sin\left(\frac{2\pi x}{d}\right)$$

$$f_2(x) = \frac{b}{2} \sin\left(\frac{2\pi x}{d/2} + \beta(x)\right)$$

So ist es weiter auch möglich, dass die Parameter Variations-Funktion die Reliefform der Reliefstruktur periodisch gemäss der Parameter-Variations-Funktion variiert, indem sie die Breite der Täler der Reliefstruktur periodisch gemäss der Parameter-Variations-Funktion variiert.

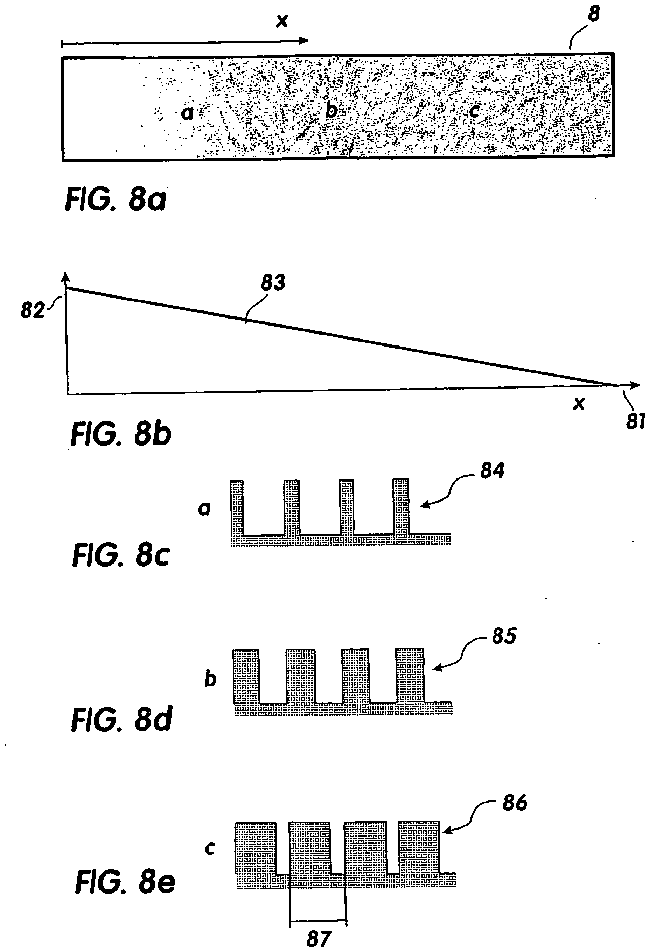

Dies wird nun beispielhaft anhand der Figuren Fig. 8a bis Fig. 8e verdeutlicht.

In einem einer Periode der Parameter-Variations-Funktion entsprechenden Bereich 8 wird die Breite der Täler der Reliefstruktur bei konstanter Spatialfrequenz linear verkleinert. Wie in Fig. 8b dargestellt, wird so eine Breite 82 der Täler der Reliefstruktur entlang einer X-Achse 81 gemäss einer Funktion 83 variiert. Die Parameter-Variations-Funktion ist beispielsweise eine sägezahnförmige Funktion, die die Breite einer rechteckförmigen Reliefstruktur mit einem Linienabstand von 300 nm zwischen 230 und 70 nm variiert. Damit ergibt sich in einem Bereich a des Flächenbereiches 8 eine Profilform 84 (Fig. 8c), in einem Bereich b des Flächenbereiches 8 eine Profilform 85 (Fig. 8d) und in einem Bereich c des Flächenbereiches 8 eine Profilform 86 (Fig. 8e), wobei die Profilformen 84, 85 und 86 einen Linienabstand 87 von 300 nm besitzen.

Gemäss der gewählten Spatialfrequenz werden in den Bereichen a, b und c optische Effekte unterschiedlicher Farbe und Helligkeit erzeugt, so dass sich bei Phasenverschiebung von Muster- und Hintergrundbereich die bereits oben angeführten optischen Überlagerungseffekte bei Verwendung eines Verifikationselements / ohne Verwendung eines Verifikationselements ergeben.

Die Periode der Parameter-Variations-Funktion liegt hier vorzugsweise ebenfalls in dem Bereich von 40 bis 300 μm.

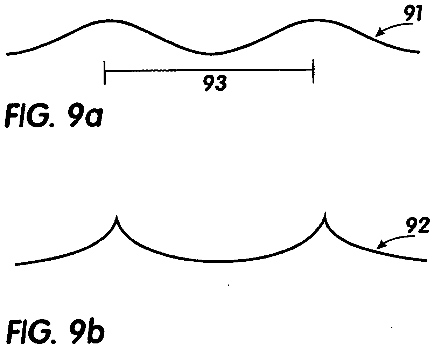

Gemäss eines weiteren Ausführungsbeispiels der Erfindung ist es auch möglich, als Reliefstruktur eine Makrostruktur von mehr als 300 Linien pro Millimeter zu verwenden. Typische Perioden einer derartigen Makrostruktur betragen 10 μm. Makrostrukturen wirken so im wesentlichen durch Reflexion und nicht durch Beugung. Zwei derartige Makrostrukturen sind in den Figuren Fig. 9a und Fig. 9b gezeigt, wobei die Figur Fig. 9a eine Makrostruktur 91 mit einer Periode 93 und Figur Fig. 9b eine Makrostruktur 92 mit der Periode 93 beschreibt. Die Periode 93 beträgt beispielsweise 100 μm. Werden nun die Makrostrukturen 91 und 92 durch ein Verifikationselement mit einem der Periode 93 entsprechenden Linienabstand betrachtet, so sind je nach Lage des Verifikationselements unterschiedliche Bereiche der Makrostrukturen 91 und 92 sichtbar. In den Musterbereichen ist die Makrostruktur 91 nun gegenüber der Makrostruktur in dem Hintergrundbereich phasenverschoben, so dass im Hintergrundbereich und im Musterbereich bei Verwendung des Verifikationselements jeweils unterschiedliche Bereiche der Makrostrukturen 91 und 92 sichtbar sind. Wenn das Verifikationselement nicht aufgelegt ist, erscheint der gesamte Flächenbereich homogen. Bei Auflage des Verifikationselements ergibt sich ein Helligkeitskontrast zwischen dem Musterbereich und dem Hintergrundbereich.

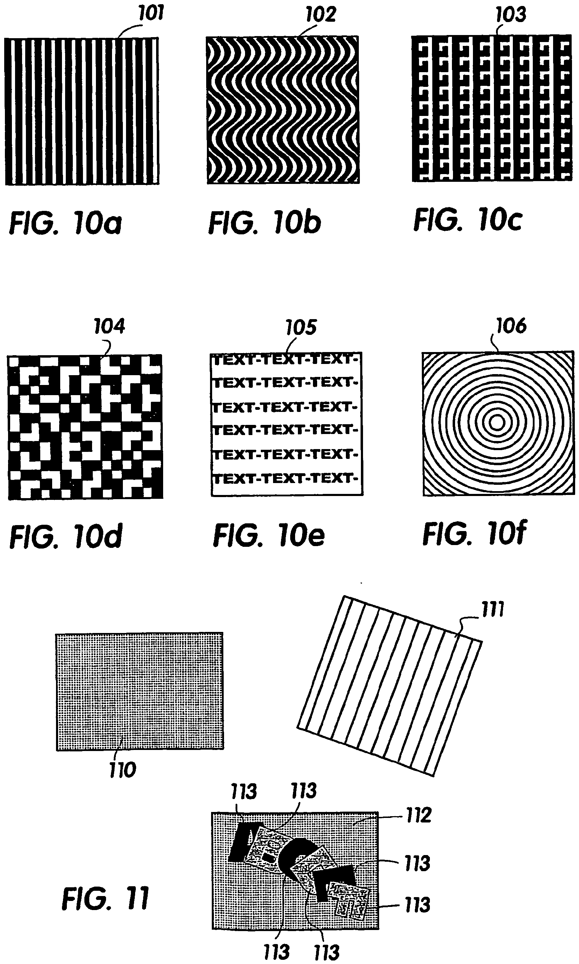

Die Ausführungsbeispiele nach den Figuren Fig. 1 bis Fig. 9d sind jeweils anhand der Verwendung eines linearen Linienrasters als Codierungsschema/Verifikationselement erläutert. Wie bereits oben ausgeführt, ist es jedoch auch möglich, neben einem linearen Linienraster auch weitere, insbesondere auch zweidimensionale Raster zu verwenden. Fig. 10a zeigt so ein lineares Linienraster 101 und die Figuren Fig. 10b bis Fig. 10f weitere Linienraster 102 bis 106, die ebenfalls bei den Ausführungsbeispielen nach den Figuren Fig. 1 bis Fig. 9b Verwendung finden können.

Weiter ist es auch möglich, in einem Flächenbereich Musterbereiche vorzusehen, die bei unterschiedlichen Rastern sichtbar werden. So ist in Fig. 11 ein Flächenbereich 110 gezeigt, bei dem verschiedene Musterbereiche 113 vorgesehen sind, die jeweils bei einem bestimmten Neigungswinkel eines Verifikationselements 11 sichtbar werden. Wird nun das Verifikationselement 11 auf dem Flächenbereich 112 gedreht, so ergibt sich der Effekt eines sich bewegenden Bildes. Wird der Flächenbereich 112 ohne Verifikationselement 111 betrachtet, so ergibt sich der Eindruck eines homogenen Flächenbereichs 110. Derartige Musterbereiche 113 sind mit den Ausführungsbeispielen nach den Figuren Fig. 1 bis Fig. 9b realisierbar, wobei es natürlich auch möglich ist, unterschiedliche Ausführungsbeispiele miteinander zu kombinieren, um hier noch zusätzliche Farberscheinungen und betrachtungswinkelabhängige Sicherheitsmerkmale zu erzielen.

Weiter ist es möglich, ein Verifikationselement zu verwenden, dessen Raster nicht mit dem der Parameter-Variations-Funktion übereinstimmt. So kann das Verifikationselement beispielsweise eine Periode besitzen, die der zwei- oder mehrfachen Periode der Parameter-Variations-Funktion entspricht. Weiter kann das Verifikationselement auch ein hyperbolisches Muster einer der Periode der Parameter-Variations-Funktion entsprechenden Periode ausformen.

Die oben beschrieben Sicherheitsmerkmale können als allein stehende Sicherheitsmerkmale eingesetzt werden. Es ist jedoch auch mögliche, diese Sicherheitsmerkmale mit weiteren Sicherheitsmerkmalen innerhalb eines Sicherheitsprodukts zu kombinieren. Sie können so Teil eines OVDs (Optical Variable Device), beispielsweise Kinegram® oder Truststseal® sein und so beispielsweise den Hintergrund eines Kinegram® bilden. Weiter ist es möglich, dass die oben beschriebenen Sicherheitsmerkmale mosaikartig in einem OVD angeordnet werden.

## Patentansprüche

1. Optisches Sicherheitselement (1) mit einer Substratschicht (14), wobei in einem von einer X- und einer Y-Achse aufgespannten Flächenbereich (21, 27, 33, 4, 50, 7, 65) der Substratschicht eine durch Retiefparameter, Reliefform, Relieftiefe, Spatialfrequenz und Azimutwinkel, definierte Reliefstruktur (17) zur Erzeugung eines optisch erkennbaren Effektes abgeformt ist,
   **dadurch gekennzeichnet,**
   **dass** ein oder mehrere von Reliefform und Azimutwinkel in dem Flächenbereich (21, 27, 33, 4, 50, 7, 65) gemäss einer Parameter-Vanations-Funktion (53, 54, 55) variiert sind, dass der Flächenbereich (21, 27, 33, 4, 50, 7, 65) in ein oder mehrere Musterbereiche (23, 30, 29, 35, 502, 74, 67) und einen Hintergrundbereich (22, 28, 34, 501, 73, 66) geteilt ist und dass ein oder mehrere von Reliefform und Azimutwinkel In den ein oder mehreren Musterbereichen (23, 29, 30, 35, 502, 74, 67) gemäss einer gegenüber der Parameter-Variations-Funktion des Hintergrundbereiches (22, 28, 34, 501, 73, 66) phasenverschobenen Parameter-Variations-Funktion variiert sind.

2. Optisches Sicherheitselement (1) mit einer Substratschicht (14), wobei in einem von einer X- und einer Y-Achse aufgespannten Flächenbereich (21, 27, 33, 4, 50, 7, 65) der Substratschicht eine durch Reliefparameter, Reliefform. Relieftiefe, Spatialfrequenz und Azimutwinkel, definierte Reliefstruktur (17) zur Erzeugung eines optisch erkennbaren Effektes abgeformt ist,
   **dadurch gekennzeichnet,**
   **dass** die Spatialfrequenz in dem Flächenbereich (21, 27, 33 4, 50, 7,65) gemäss einer periodischen Parameter-Variations-Funktion (53, 54, 55) periodisch variiert ist, wobei die Periode kleiner als 300 $\mu$m ist, dass der Flächenbereich (21, 27, 33, 4, 50, 7, 65) in ein oder mehrere Musterbereiche (23, 30, 29, 35, 502, 74, 67) und einen Hintergrundbereich (22, 28, 34, 501, 73, 66) geteilt ist und dass die Spatialfrequenz in den ein oder mehreren Musterbereichen (23, 29, 30, 35, 502, 74, 67) gemäss einer gegenüber der Parameter-Variations-Funktion des Hintergrundbereiches (22, 28, 34, 501, 73, 66) phasenverschobenen Perameter-Variations-Funktion variiert ist.

3. Optisches Sicherheitselement (1) mit einer Substratschicht (14), wobei in einem von einer X- und einer Y-Achse aufgespannten Flächenbereich (21, 27, 33, 4, 50, 7, 65) der Substratschicht eine durch Reliefparameter, Reliefform, Relieftiefe, Spatialfrequenz und Azimutwinkel, definierte Reliefstruktur (17) zur Erzeugung eines optisch erkennbaren Effektes abgeformt ist,
   **dadurch gekennzeichnet,**
   **dass** die Reliefform und ein oder mehrere von Relieftiefe und Spatialfrequenz in dem Flächenbereich 21, 27, 33, 4, 50, 7, 65) gemäss einer Parameter-Variations-Funktion (53, 54, 55) variiert sind, dass der Flächenberleich (21, 27, 33, 4, 50, 7, 65) in ein oder mehrere Musterbereiche (23, 30, 29, 35, 502, 74, 67) und einen Hintergrundbereich (22, 28, 34, 501, 73, 66) geteilt ist und dass die Reliefform und ein oder mehrere von Relieftiefe und Spatialfrequenz in den ein oder mehreren Musterbereichen (23, 29, 30, 35, 502, 74, 67) gemäss einer gegenüber der Parameter-Variations-Funktion des Hintergrundbereiches (22, 28, 34, 501, 73, 66) phasenverschobenen Parameter-Variations-Funktion variiert sind.

4. Optisches Sicherheitselement (1) mit einer Substratschicht (14), wobei in einem von einer X- und einer Y-Achse aufgespannten Flächenbereich (21, 27, 33, 4, 50, 7, 65) der Substratschicht eine durch Reliefparameter, Reliefform, Relieftiefe, Spatialfrequenz und Azimutwinkel, definierte Reliefstruktur (17) zur Erzeugung eines optisch erkennbaren Effektes abgeformt ist,
**dadurch gekennzeichnet,**
**dass** der Azimutwinkel und ein oder mehrere von Relieftiefe und Spatialfrequenz in dem Flächenbereich (21, 27, 33, 4, 50, 7, 65) gemäss einer Parameter-Variations-Funktion (53, 54, 55) variiert sind, dass der Flächenbereich (21, 27, 33, 4, 50, 7, 65) in ein oder mehrere Musterbereiche (23, 30, 29, 35, 502, 74, 67) und einen Hintergrundbereich (22, 28, 34, 501, 73, 66) geteilt ist und dass der Azimutwinkel und ein oder mehrere von Relieftiefe und Spatialfrequenz in den ein oder mehreren Musterbereichen (23, 29, 30, 35, 502, 74, 67) gemäss einer gegenüber der Parameter-Variations-Funktion des Hintergrundbereiches (22, 28, 34, 501, 73, 66) phasenverschobenen Parameter-Variations-Funktion variiert sind.

5. Optisches Sichefieitselement (1) mit einer Substratschicht (14), wobei in einem von einer X- und einer Y-Achse aufgespannten Flächenbereich (21, 27, 33, 4, 50, 7, 65) der Substratschicht eine durch Reliefparameter, Reliefform, Relieftiefe. Spatialfrequenz und Azimutwinkel, definierte Reliefstruktur (17) zur Erzeugung eines optisch erkennbaren Effektes abgeformt ist,
**dadurch gekennzeichnet,**
**dass** die Reliefform, der Azimutwinkel und ein oder mehrere von Relieftiefe und Spatialfrequenz in dem Flächenbereich (21, 27, 33, 4, 50, 7, 65) gemäss einer Parameter-Variations-Funktion (53, 54, 55) variiert sind, dass der Flächenbereich (21, 27, 33, 4, 50, 7, 65) in ein oder mehrere Musterbereiche (23, 30, 29, 35, 502, 74, 67) und einen Hintergrundbereich (22, 28, 34, 501, 73, 66) geteilt ist und dass die Reliefform, der Azimutwinkel und ein oder mehrere von Relieftiefe und Spatialfrequenz in den ein oder mehreren Musterbereichen (23, 29, 30, 35, 502, 74, 67) gemäss einer gegenüber der Parameter-Variations-Funktion des Hintergrundbereiches (22, 28, 34, 501, 73, 66) phasenverschobenen Parameter-Variations-Funktion variiert sind.

6. Optisches Sicherheitselement (1) mit einer Substratschicht (14), wobei in einem von einer X- und einer Y-Achse aufgespannten Flächenbereich (21, 27, 33, 4, 50, 7, 65) der Substratschicht eine durch Reliefparameter, Reliefform, Relieftiefe, Spatialfrequenz und Azimutwinkel, Reliefstruktur (17) zur Erzeugung eines optisch erkennbaren Effektes abgeformt ist,
**dadurch gekennzeichnet**
**dass** die Relieftiefe in dem Flächenbereich (21, 27, 33, 4, 50, 7, 65) gemäss einer Parameter-Variations-Funktion (53, 54, 55) variiert ist und die Spatialfrequenz in dem Flächenbereich (21, 27, 33, 4, 50, 7, 65) gemäß einer periodischen Parameter-Variations-Funktion (53, 54, 55) periodisch variiert ist, wobei die Periode kleiner als 300 $\mu$m ist, dass der Flächenbereich (21, 27, 33, 4, 50, 7, 65) in ein oder mehrere Musterbereiche (23, 30, 29, 35, 502, 74, 67) und einen Hintergrundbereich (22, 28, 34, 501, 73, 66) geteilt ist und dass die Relieftiefe und die Spatialfrequenz in den ein oder mehreren Musterbereichen (23, 29, 30, 35, 502, 74, 67) gemäss einer gegenüber der Parameter-Variations-Funktion des Hintergrundbereiches (22, 28, 34, 501, 73, 66) phasenverschobenen Parameter-Variations-Funktion variiert sind.

7. Optisches Sicherheitselement nach einem der Ansprüche 1 - 6,
**dadurch gekennzeichnet ,**
**dass** die Phasenverschiebung der Parameter-Variations-Funktion zwischen Musterbereich und Hintergrundbereich etwa 180 Grad beträgt.

8. Optisches Sicherheitselement nach einem der vorhergehenden Ansprüche,
**dadurch gekennzeichnet,**
**dass** die Phasenverschiebung der Parameter-Variations-Funktion zwischen Musterbereich und Hintergrundbereich gemäß des einzustellenden Kontrastes gewählt ist.

9. Optisches Sicherheitselement nach einem der vorhergehenden Ansprüche,
**dadurch gekennzeichnet,**
**dass** die Reliefstruktur ein Beugungsgitter ist, dessen Azimutwinkel periodisch gemäss der Parameter-Variations-Funktion variiert ist.

**10.** Optisches Sicherheitselement nach Anspruch 9,
**dadurch gekennzeichnet,**
**dass** die Parameter-Variations-Funktion den Azimutwinkel des Beugungsgitters (28, 33) abhängig von dem Wert der X-Achse periodisch variiert.

**11.** Optisches Sicherheitselement nach Anspruch 10,
**dadurch gekennzeichnet,**
**dass** die Parameter-Variations-Funktion den Azimutwinkel des Beugungsgitters (28) derart variiert, dass sich das Beugungsgitter aus einer Vielzahl von schlangenlinienförmigen Linien zusammensetzt.

**12.** Optisches Sicherheitselement nach Anspruch 11,
**dadurch gekennzeichnet,**
**dass** die Parameter-Variations-Funktion eine Sinusfunktion ist, die den Azimutwinkel des Beugungsgitters (28) abhängig von dem Wert der X-Achse variiert.

**13.** Optisches Sicherheitselement nach einem der Ansprüche 9 oder 10,
**dadurch gekennzeichnet,**
**dass** die Parameter-Variations-Funktion den Azimutwinkel des Beugungsgitters (4) abhängig von dem Wert der X-Achse und dem Wert der Y-Achse periodisch variiert.

**14.** Optisches Sicherheitselement nach Anspruch 13,
**dadurch gekennzeichnet ,**
**dass** die Parameter-Variations-Funktion den Azimutwinkel des Beugungsgitters derartig variiert, dass das Beugungsgitter (4) sich aus einer Vielzahl von in konzentrischen Kreisen angeordneten Linien zusammensetzt.

**15.** Optisches Sicherheitselement nach einem der Ansprüche 9 bis 14,
**dadurch gekennzeichnet,**
**dass** das Beugungsgitter eine Spatialfrequenz von mehr als 300 Linien pro mm hat, insbesondere eine Spatialfrequenz von 800 bis 1.200 Linien pro mm hat.

**16.** Optisches Sicherheitselement nach einem der vorhergehenden Ansprüche,
**dadurch gekennzeichnet,**
**dass** die Reliefstruktur (17) ein Beugungsgitter (50) ist, dessen Spatialfrequenz periodisch gemäss der Parameter-Variations-Funktion (53, 54, 55) variiert ist.

**17.** Optisches Sicherheitselement nach Anspruch 16,
**dadurch gekennzeichnet,**
**dass** die Parameter-Variations-Funktion (53, 54, 55) die Spatialfrequenz des Beugungsgitters (50) abhängig von dem Wert der X-Achse periodisch zwischen einer Maximalfrequenz, vorzugsweise 1.200 Linien pro mm, und einer Minimalfrequenz, vorzugsweise 800 Linien pro mm, variiert.

**18.** Optisches Sicherheitselement nach Anspruch 17,
**dadurch gekennzeichnet,**
**dass** die Parameter-Variations-Funktion eine Sägezahn-Funktion (53), eine Dreieck-Funktion (54) oder eine Sinus-Funktion (55) ist.

**19.** Optisches Sicherheitselement nach einem der vorhergehenden Ansprüche,
**dadurch gekennzeichnet,**
**dass** die Reliefstruktur ein Beugungsgitter ist, dessen Profiltiefe periodisch gemäss der Parameter-Variations-Funktion variiert ist.

**20.** Optisches Sicherheitselement nach Anspruch 19,
**dadurch gekennzeichnet,**
**dass** die Parameter-Variations-Funktion die Profiltiefe des Beugungsgitters (61) abhängig von dem Wert der X-Achse periodisch zwischen einer Maximaltiefe, vorzugsweise 300 nm, und einer Minimaltiefe, vorzugsweise 50 nm, variiert.

**21.** Optisches Sicherheitselement nach einem der Ansprüche 19 oder 20,

**dadurch gekennzeichnet,**
**dass** die Parameter-Variations-Funktion eine Dreiecks-, Rechtecks- oder Sinus-Funktion ist.

22. Optisches Sicherheitselement nach einem der vorhergehenden Ansprüche,
**dadurch gekennzeichnet,**
**dass** die Reliefform (75, 76) periodisch gemäss der Parameter-Variations-Funktion variiert ist.

23. Optisches Sicherheitselement nach Anspruch 22,
**dadurch gekennzeichnet,**
**dass** die Reliefform periodisch zwischen zwei asymmetrischen, zueinander spiegelsymmetrischen Reliefformen (75, 76) variiert ist.

24. Optisches Sichefieitselement nach einem der vorhergehenden Ansprüche,
**dadurch gekennzeichnet,**
**dass** die Breite der Täler der Reliefstruktur periodisch gemäss der Parameter-Variations-Funktion variiert ist.

25. Optisches Sicherheitselement nach einem der vorhergehenden Ansprüche,
**dadurch gekennzeichnet,**
**dass** der mittlere Azimutwinkel der Reliefstruktur (17) jeweils dem Azimutwinkel eines zugeordneten Verifikations-Rasters (101 bis 106) entspricht.

26. System zur Visualisierung von versteckten Informationen mit einem optischen Sicherheitselement (1) nach einem der Ansprüche 1 bis 6,
**dadurch gekennzeichnet,**
**dass** das System weiter ein Verifikationselement (20, 57, 101) aufweist, das ein durch eine periodische Transmissions-Funktion definiertes Verifikations-Raster besitzt, dessen Periode der Periode der Parameter-Variations-Funktion entspricht.

27. System nach Anspruch 26,
**dadurch gekennzeichnet,**
**dass** die Transmissions-Funktion eine nicht binäre Transmissions-Funktion, insbesondere eine Sinus-Funktion ist.


**Claims**

1. Optical security element (1) having a substrate layer (14), wherein a relief structure (17), which is defined by relief parameters, relief form, relief depth, spatial frequency and azimuth angle, is formed in a surface region (21, 27, 33, 4, 50, 7, 65) of the substrate layer, which surface region is defined by an X-axis and a Y-axis, in order to generate an optically discernible effect, **characterized in that** one or more of relief form and azimuth angle in the surface region (21, 27, 33, 4, 50, 7, 65) are varied in accordance with a parameter variation function (53, 54, 55), **in that** the surface region (21, 27, 33, 4, 50, 7, 65) is divided into one or more pattern regions (23, 30, 29, 35, 502, 74, 67) and a background region (22, 28, 34, 501, 73, 66) and **in that** one or more of relief form and azimuth angle in the one or more pattern regions (23, 29, 30, 35, 502, 74, 67) are varied in accordance with a parameter variation function that is phase-shifted with respect to the parameter variation function of the background region (22, 28, 34, 501, 73, 66).

2. Optical security element (1) having a substrate layer (14), wherein a relief structure (17), which is defined by relief parameters, relief form, relief depth, spatial frequency and azimuth angle, is formed in a surface region (21, 27, 33, 4, 50, 7, 65) of the substrate layer, which surface region is defined by an X-axis and a Y-axis, in order to generate an optically discernible effect, **characterized in that** the spatial frequency in the surface region (21, 27, 33, 4, 50, 7, 65) is varied periodically in accordance with a periodic parameter variation function (53, 54, 55), wherein the period is less than 300 μm, **in that** the surface region (21, 27, 33, 4, 50, 7, 65) is divided into one or more pattern regions (23, 30, 29, 35, 502, 74, 67) and a background region (22, 28, 34, 501, 73, 66) and **in that** the spatial frequency in the one or more pattern regions (23, 29, 30, 35, 502, 74, 67) is varied in accordance with a parameter variation function that is phase-shifted with respect to the parameter variation function of the background region (22, 28, 34, 501, 73, 66).

3. Optical security element (1) having a substrate layer (14), wherein a relief structure (17), which is defined by relief parameters, relief form, relief depth, spatial frequency and azimuth angle, is formed in a surface region (21, 27, 33, 4, 50, 7, 65) of the substrate layer, which surface region is defined by an X-axis and a Y-axis, in order to generate an optically discernible effect, **characterized in that** the relief form and one or more of relief depth and spatial frequency in the surface region (21, 27, 33, 4, 50, 7, 65) are varied in accordance with a parameter variation function (53, 54, 55), **in that** the surface region (21, 27, 33, 4, 50, 7, 65) is divided into one or more pattern regions (23, 30, 29, 35, 502, 74, 67) and a background region (22, 28, 34, 501, 73, 66) and **in that** the relief form and one or more of relief depth and spatial frequency in the one or more pattern regions (23, 29, 30, 35, 502, 74, 67) are varied in accordance with a parameter variation function that is phase-shifted with respect to the parameter variation function of the background region (22, 28, 34, 501, 73, 66).

4. Optical security element (1) having a substrate layer (14), wherein a relief structure (17), which is defined by relief parameters, relief form, relief depth, spatial frequency and azimuth angle, is formed in a surface region (21, 27, 33, 4, 50, 7, 65) of the substrate layer, which surface region is defined by an X-axis and a Y-axis, in order to generate an optically discernible effect, **characterized in that** the azimuth angle and one or more of relief depth and spatial frequency in the surface region (21, 27, 33, 4, 50, 7, 65) are varied in accordance with a parameter variation function (53, 54, 55), **in that** the surface region (21, 27, 33, 4, 50, 7, 65) is divided into one or more pattern regions (23, 30, 29, 35, 502, 74, 67) and a background region (22, 28, 34, 501, 73, 66) and **in that** the azimuth angle and one or more of relief depth and spatial frequency in the one or more pattern regions (23, 29, 30, 35, 502, 74, 67) are varied in accordance with a parameter variation function that is phase-shifted with respect to the parameter variation function of the background region (22, 28, 34, 501, 73, 66).

5. Optical security element (1) having a substrate layer (14), wherein a relief structure (17), which is defined by relief parameters, relief form, relief depth, spatial frequency and azimuth angle, is formed in a surface region (21, 27, 33, 4, 50, 7, 65) of the substrate layer, which surface region is defined by an X-axis and a Y-axis, in order to generate an optically discernible effect, **characterized in that** the relief form, the azimuth angle and one or more of relief depth and spatial frequency in the surface region (21, 27, 33, 4, 50, 7, 65) are varied in accordance with a parameter variation function (53, 54, 55), **in that** the surface region (21, 27, 33, 4, 50, 7, 65) is divided into one or more pattern regions (23, 30, 29, 35, 502, 74, 67) and a background region (22, 28, 34, 501, 73, 66) and **in that** the relief form, the azimuth angle and one or more of relief depth and spatial frequency in the one or more pattern regions (23, 29, 30, 35, 502, 74, 67) are varied in accordance with a parameter variation function that is phase-shifted with respect to the parameter variation function of the background region (22, 28, 34, 501, 73, 66).

6. Optical security element (1) having a substrate layer (14), wherein a relief structure (17), which is defined by relief parameters, relief form, relief depth, spatial frequency and azimuth angle, is formed in a surface region (21, 27, 33, 4, 50, 7, 65) of the substrate layer, which surface region is defined by an X-axis and a Y-axis, in order to generate an optically discernible effect, **characterized in that** the relief depth in the surface region (21, 27, 33, 4, 50, 7, 65) is varied in accordance with a parameter variation function (53, 54, 55) and the spatial frequency in the surface region (21, 27, 33, 4, 50, 7, 65) is varied periodically in accordance with a periodic parameter variation function (53, 54, 55), wherein the period is less than 300 $\mu$m, **in that** the surface region (21, 27, 33, 4, 50, 7, 65) is divided into one or more pattern regions (23, 30, 29, 35, 502, 74, 67) and a background region (22, 28, 34, 501, 73, 66) and **in that** the relief depth and the spatial frequency in the one or more pattern regions (23, 29, 30, 35, 502, 74, 67) is varied in accordance with a parameter variation function that is phase-shifted with respect to the parameter variation function of the background region (22, 28, 34, 501, 73, 66).

7. Optical security element according to one of Claims 1-6, **characterized in that** the phase shift of the parameter variation function between pattern region and background region is about 180 degrees.

8. Optical security element according to one of the preceding claims, **characterized in that** the phase shift of the parameter variation function between pattern region and background region is selected in accordance with the contrast to be set.

9. Optical security element according to one of the preceding claims, **characterized in that** the relief structure is a diffraction grating, the azimuth angle of which is varied periodically in accordance with the parameter variation function.

10. Optical security element according to Claim 9, **characterized in that** the parameter variation function periodically varies the azimuth angle of the diffraction grating (28, 33) in dependence on the value of the X-axis.

11. Optical security element according to Claim 10, **characterized in that** the parameter variation function varies the azimuth angle of the diffraction grating (28) such that the diffraction grating is composed of a multiplicity of serpentine lines.

12. Optical security element according to Claim 11, **characterized in that** the parameter variation function is a sine function, which varies the azimuth angle of the diffraction grating (28) in dependence on the value of the X-axis.

13. Optical security element according to either of Claims 9 and 10, **characterized in that** the parameter variation function periodically varies the azimuth angle of the diffraction grating (4) in dependence on the value of the X-axis and the value of the Y-axis.

14. Optical security element according to Claim 13, **characterized in that** the parameter variation function varies the azimuth angle of the diffraction grating such that the diffraction grating (4) is composed of a multiplicity of lines arranged in concentric circles.

15. Optical security element according to one of Claims 9 to 14, **characterized in that** the diffraction grating has a spatial frequency of more than 300 lines per mm, in particular a spatial frequency of 800 to 1200 lines per mm.

16. Optical security element according to one of the preceding claims, **characterized in that** the relief structure (17) is a diffraction grating (50), the spatial frequency of which is varied periodically in accordance with the parameter variation function (53, 54, 55).

17. Optical security element according to Claim 16, **characterized in that** the parameter variation function (53, 54, 55) periodically varies the spatial frequency of the diffraction grating (50) in dependence on the value of the X-axis between a maximum frequency, preferably 1200 lines per mm, and a minimum frequency, preferably 800 lines per mm.

18. Optical security element according to Claim 17, **characterized in that** the parameter variation function is a sawtooth function (53), a triangular function (54) or a sine function (55).

19. Optical security element according to one of the preceding claims, **characterized in that** the relief structure is a diffraction grating, the profile depth of which is varied periodically in accordance with the parameter variation function.

20. Optical security element according to Claim 19, **characterized in that** the parameter variation function periodically varies the profile depth of the diffraction grating (61) in dependence on the value of the X-axis between a maximum depth, preferably 300 nm, and a minimum depth, preferably 50 nm.

21. Optical security element according to either of Claims 19 and 20, **characterized in that** the parameter variation function is a triangular, rectangular or sine function.

22. Optical security element according to one of the preceding claims, **characterized in that** the relief form (75, 76) is varied periodically in accordance with the parameter variation function.

23. Optical security element according to Claim 22, **characterized in that** the relief form is varied periodically between two asymmetrical relief forms (75, 76), which are mirror symmetrical with respect to each other.

24. Optical security element according to one of the preceding claims, **characterized in that** the width of the valleys of the relief structure is varied periodically in accordance with the parameter variation function.

25. Optical security element according to one of the preceding claims, **characterized in that** the average azimuth angle of the relief structure (17) corresponds in each case to the azimuth angle of an assigned verification pattern (101 to 106).

26. System for visualizing hidden information, having an optical security element (1) according to one of Claims 1 to 6, **characterized in that** the system furthermore has a verification element (20, 57, 101), which has a verification pattern defined by a periodic transmission function, with the period of the verification pattern corresponding to the period of the parameter variation function.

27. System according to Claim 26, **characterized in that** the transmission function is a non-binary transmission function, in particular a sine function.

**Revendications**

1. Elément de sécurité optique (1) doté d'une couche de substrat (14), sachant qu'une structure en relief (17), définie par des paramètres de relief (forme de relief, profondeur de relief, fréquence spatiale et angle azimutal) et destinée à produire un effet optiquement perceptible, est formée dans une zone de surface (21, 27, 33, 4, 50, 7, 65) de la couche de substrat qui est définie par un axe X et un axe Y, **caractérisé en ce qu'**on fait varier la forme de relief et/ou l'angle azimutal dans la zone de surface (21, 27, 33, 4, 50, 7, 65) selon une fonction (53, 54, 55) de variation de paramètres, **en ce que** la zone de surface (21, 27, 33, 4, 50, 7, 65) est divisée en une ou plusieurs zone(s) à motif (23, 30, 29, 35, 502, 74, 67) et une zone de fond (22, 28, 34, 501, 73, 66), et **en ce qu'**on fait varier la forme de relief et/ou l'angle azimutal dans la ou les zone(s) à motif (23, 29, 30, 35, 502, 74, 67) selon une fonction de variation de paramètres qui est déphasée par rapport à la fonction de variation de paramètres de la zone de fond (22, 28, 34, 501, 73, 66).

2. Elément de sécurité optique (1) doté d'une couche de substrat (14), sachant qu'une structure en relief (17), définie par des paramètres de relief (forme de relief, profondeur de relief, fréquence spatiale et angle azimutal) et destinée à produire un effet optiquement perceptible, est formée dans une zone de surface (21, 27, 33, 4, 50, 7, 65) de la couche de substrat qui est définie par un axe X et un axe Y, **caractérisé en ce qu'**on fait varier périodiquement la fréquence spatiale dans la zone de surface (21, 27, 33, 4, 50, 7, 65) selon une fonction (53, 54, 55) périodique de variation de paramètres, la période étant inférieure à 300 $\mu$m, **en ce que** la zone de surface (21, 27, 33, 4, 50, 7, 65) est divisée en une ou plusieurs zone (s) à motif (23, 30, 29, 35, 502, 74, 67) et une zone de fond (22, 28, 34, 501, 73, 66), et **en ce qu'**on fait varier la fréquence spatiale dans la ou les zone(s) à motif (23, 29, 30, 35, 502, 74, 67) selon une fonction de variation de paramètres qui est déphasée par rapport à la fonction de variation de paramètres de la zone de fond (22, 28, 34, 501, 73, 66).

3. Elément de sécurité optique (1) doté d'une couche de substrat (14), sachant qu'une structure en relief (17), définie par des paramètres de relief (forme de relief, profondeur de relief, fréquence spatiale et angle azimutal) et destinée à produire un effet optiquement perceptible, est formée dans une zone de surface (21, 27, 33, 4, 50, 7, 65) de la couche de substrat qui est définie par un axe X et un axe Y, **caractérisé en ce qu'**on fait varier la forme de relief ainsi que la profondeur de relief et/ou la fréquence spatiale dans la zone de surface (21, 27, 33, 4, 50, 7, 65) selon une fonction (53, 54, 55) de variation de paramètres, **en ce que** la zone de surface (21, 27, 33, 4, 50, 7, 65) est divisée en une ou plusieurs zone(s) à motif (23, 30, 29, 35, 502, 74, 67) et une zone de fond (22, 28, 34, 501, 73, 66), et **en ce qu'**on fait varier la forme de relief ainsi que la profondeur de relief et/ou la fréquence spatiale dans la ou les zone(s) à motif (23, 29, 30, 35, 502, 74, 67) selon une fonction de variation de paramètres qui est déphasée par rapport à la fonction de variation de paramètres de la zone de fond (22, 28, 34, 501, 73, 66).

4. Elément de sécurité optique (1) doté d'une couche de substrat (14), sachant qu'une structure en relief (17), définie par des paramètres de relief (forme de relief, profondeur de relief, fréquence spatiale et angle azimutal) et destinée à produire un effet optiquement perceptible, est formée dans une zone de surface (21, 27, 33, 4, 50, 7, 65) de la couche de substrat qui est définie par un axe X et un axe Y, **caractérisé en ce qu'**on fait varier l'angle azimutal ainsi que la profondeur de relief et/ou la fréquence spatiale dans la zone de surface (21, 27, 33, 4, 50, 7, 65) selon une fonction (53, 54, 55) de variation de paramètres, **en ce que** la zone de surface (21, 27, 33, 4, 50, 7, 65) est divisée en une ou plusieurs zone(s) à motif (23, 30, 29, 35, 502, 74, 67) et une zone de fond (22, 28, 34, 501, 73, 66), et **en ce qu'**on fait varier l'angle azimutal ainsi que la profondeur de relief et/ou la fréquence spatiale dans la ou les zone(s) à motif (23, 29, 30, 35, 502, 74, 67) selon une fonction de variation de paramètres qui est déphasée par rapport à la fonction de variation de paramètres de la zone de fond (22, 28, 34, 501, 73, 66).

5. Elément de sécurité optique (1) doté d'une couche de substrat (14), sachant qu'une structure en relief (17), définie par des paramètres de relief (forme de relief, profondeur de relief, fréquence spatiale et angle azimutal) et destinée à produire un effet optiquement perceptible, est formée dans une zone de surface (21, 27, 33, 4, 50, 7, 65) de la couche de substrat qui est définie par un axe X et un axe Y, **caractérisé en ce qu'**on fait varier la forme de relief et l'angle azimutal ainsi que la profondeur de relief et/ou la fréquence spatiale dans la zone de surface (21, 27, 33, 4, 50, 7, 65) selon une fonction (53, 54, 55) de variation de paramètres, **en ce que** la zone de surface (21, 27, 33, 4, 50, 7, 65) est divisée en une ou plusieurs zone(s) à motif (23, 30, 29, 35, 502, 74, 67) et une zone de fond (22, 28, 34, 501, 73, 66), et **en ce qu'**on fait varier la forme de relief et l'angle azimutal ainsi que la profondeur de relief et/ou la fréquence spatiale dans la ou les zone(s) à motif (23, 29, 30, 35, 502, 74, 67) selon une fonction de variation de paramètres qui est déphasée par rapport à la fonction de variation de paramètres de la zone de fond (22, 28, 34, 501, 73, 66).

6. Elément de sécurité optique (1) doté d'une couche de substrat (14), sachant qu'une structure en relief (17), définie par des paramètres de relief (forme de relief, profondeur de relief, fréquence spatiale et angle azimutal) et destinée à produire un effet optiquement perceptible, est formée dans une zone de surface (21, 27, 33, 4, 50, 7, 65) de la couche de substrat qui est définie par un axe X et un axe Y, **caractérisé en ce qu'**on fait varier la profondeur de relief dans la zone de surface (21, 27, 33, 4, 50, 7, 65) selon une fonction (53, 54, 55) de variation de paramètres et on fait varier périodiquement la fréquence spatiale dans la zone de surface (21, 27, 33, 4, 50, 7, 65) selon une fonction (53, 54, 55) périodique de variation de paramètres, la période étant inférieure à 300 μm, **en ce que** la zone de surface (21, 27, 33, 4, 50, 7, 65) est divisée en une ou plusieurs zone (s) à motif (23, 30, 29, 35, 502, 74, 67) et une zone de fond (22, 28, 34, 501, 73, 66), et **en ce qu'**on fait varier la profondeur de relief et la fréquence spatiale dans la ou les zone(s) à motif (23, 29, 30, 35, 502, 74, 67) selon une fonction de variation de paramètres qui est déphasée par rapport à la fonction de variation de paramètres de la zone de fond (22, 28, 34, 501, 73, 66).

7. Elément de sécurité optique selon l'une quelconque des revendications 1 à 6, **caractérisé en ce que** le déphasage de la fonction de variation de paramètres entre la zone à motif et la zone de fond est d'environ 180 degrés.

8. Elément de sécurité optique selon l'une quelconque des revendications précédentes, **caractérisé en ce que** le déphasage de la fonction de variation de paramètres entre la zone à motif et la zone de fond est choisi en fonction du contraste à régler.

9. Elément de sécurité optique selon l'une quelconque des revendications précédentes, **caractérisé en ce que** la structure en relief est un réseau de diffraction dont on fait varier périodiquement l'angle azimutal selon la fonction de variation de paramètres.

10. Elément de sécurité optique selon la revendication 9, **caractérisé en ce que** la fonction de variation de paramètres fait varier périodiquement l'angle azimutal du réseau de diffraction (28, 33) en fonction de la valeur de l'axe X.

11. Elément de sécurité optique selon la revendication 10, **caractérisé en ce que** la fonction de variation de paramètres fait varier l'angle azimutal du réseau de diffraction (28) de telle sorte que le réseau de diffraction se compose d'une pluralité de lignes en forme de lignes sinueuses.

12. Elément de sécurité optique selon la revendication 11, **caractérisé en ce que** la fonction de variation de paramètres est une fonction sinus qui fait varier l'angle azimutal du réseau de diffraction (28) en fonction de la valeur de l'axe X.

13. Elément de sécurité optique selon la revendication 9 ou 10, **caractérisé en ce que** la fonction de variation de paramètres fait varier périodiquement l'angle azimutal du réseau de diffraction (4) en fonction de la valeur de l'axe X et de la valeur de l'axe Y.

14. Elément de sécurité optique selon la revendication 13, **caractérisé en ce que** la fonction de variation de paramètres fait varier l'angle azimutal du réseau de diffraction de telle sorte que le réseau de diffraction (4) se compose d'une pluralité de lignes disposées en cercles concentriques.

15. Elément de sécurité optique selon l'une quelconque des revendications 9 à 14, **caractérisé en ce que** le réseau de diffraction possède une fréquence spatiale supérieure à 300 lignes par mm, en particulier une fréquence spatiale de 800 à 1 200 lignes par mm.

16. Elément de sécurité optique selon l'une quelconque des revendications précédentes, **caractérisé en ce que** la structure en relief (17) est un réseau de diffraction (50) dont on fait varier périodiquement la fréquence spatiale selon la fonction (53, 54, 55) de variation de paramètres.

17. Elément de sécurité optique selon la revendication 16, **caractérisé en ce que** la fonction (53, 54, 55) de variation de paramètres fait varier périodiquement la fréquence spatiale du réseau de diffraction (50) en fonction de la valeur de l'axe X entre une fréquence maximale, de préférence 1 200 lignes par mm, et une fréquence minimale, de préférence 800 lignes par mm.

18. Elément de sécurité optique selon la revendication 17, **caractérisé en ce que** la fonction de variation de paramètres est une fonction (53) en dents de scie, une fonction triangulaire (54) ou une fonction sinus (55).

19. Elément de sécurité optique selon l'une quelconque des revendications précédentes, **caractérisé en ce que** la structure en relief est un réseau de diffraction dont on fait varier périodiquement la profondeur de profil selon la fonction de variation de paramètres.

20. Elément de sécurité optique selon la revendication 19, **caractérisé en ce que** la fonction de variation de paramètres fait varier périodiquement la profondeur de profil du réseau de diffraction (61) en fonction de la valeur de l'axe X entre une profondeur maximale, de préférence 300 nm, et une profondeur minimale, de préférence 50 nm.

21. Elément de sécurité optique selon la revendication 19 ou 20, **caractérisé en ce que** la fonction de variation de paramètres est une fonction triangulaire, une fonction rectangulaire ou une fonction sinus.

22. Elément de sécurité optique selon l'une quelconque des revendications précédentes, **caractérisé en ce qu'**on fait varier périodiquement la forme de relief (75, 76) selon la fonction de variation de paramètres.

23. Elément de sécurité optique selon la revendication 22, **caractérisé en ce qu'**on fait varier périodiquement la forme de relief entre deux formes de relief (75, 76) asymétriques, inversement symétriques l'une par rapport à l'autre.

24. Elément de sécurité optique selon l'une quelconque des revendications précédentes, **caractérisé en ce qu'**on fait varier périodiquement la largeur des creux de la structure en relief selon la fonction de variation de paramètres.

25. Elément de sécurité optique selon l'une quelconque des revendications précédentes, **caractérisé en ce que** l'angle azimutal moyen de la structure en relief (17) correspond respectivement à l'angle azimutal d'une trame de vérification (101 à 106) associée.

26. Système de visualisation d'informations cachées avec un élément de sécurité optique (1) selon l'une quelconque des revendications 1 à 6, **caractérisé en ce que** le système comporte en outre un élément de vérification (20, 57, 101) possédant une trame de vérification définie par une fonction de transmission périodique dont la période correspond à la période de la fonction de variation de paramètres.

27. Système selon la revendication 26, **caractérisé en ce que** la fonction de transmission est une fonction de transmission non binaire, en particulier une fonction sinus.

**FIG. 1**

**FIG. 2a**

**FIG. 2b**

FIG. 2c

**FIG. 3**

**FIG. 4**

**FIG. 5a**

**FIG. 5b**

**FIG. 5c**

FIG. 5d

FIG. 6a

FIG. 6b

FIG. 7a

FIG. 7b

FIG. 7c

FIG. 7d

FIG. 7e

x ⟶

8

a      b      c

**FIG. 8a**

82

83

x

81

**FIG. 8b**

84

a

**FIG. 8c**

85

b

**FIG. 8d**

86

c

**FIG. 8e**

87

FIG. 9a

FIG. 9b

**FIG. 10a**

**FIG. 10b**

**FIG. 10c**

**FIG. 10d**

**FIG. 10e**

**FIG. 10f**

**FIG. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6351537 B1
- US 5999280 A
- US 6324004 B1
- DE 10044465 A1
- WO 02100653 A1
- EP 0520363 A
- US 6062604 A
- EP 1102208 A